(19) Europäisches Patentamt
European Patent Office
Office européen des brevets

(11) **EP 3 972 320 A1**

(12) **EUROPEAN PATENT APPLICATION**
published in accordance with Art. 153(4) EPC

(43) Date of publication:
**23.03.2022 Bulletin 2022/12**

(21) Application number: **20805773.7**

(22) Date of filing: **14.05.2020**

(51) International Patent Classification (IPC):
**H04W 16/28** (2009.01)    **H04W 72/04** (2009.01)
**H04B 7/06** (2006.01)    **H04W 52/14** (2009.01)

(52) Cooperative Patent Classification (CPC):
**H04B 7/06; H04W 16/28; H04W 52/14;
H04W 72/04**

(86) International application number:
**PCT/JP2020/019214**

(87) International publication number:
**WO 2020/230839 (19.11.2020 Gazette 2020/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.05.2019 JP 2019091721**

(71) Applicant: **NTT DOCOMO, INC.**
**Chiyoda-Ku**
**Tokyo 100-6150 (JP)**

(72) Inventors:
• **MATSUMURA, Yuki**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **USER EQUIPMENT AND WIRELESS COMMUNICATION METHOD**

(57)    A user terminal includes: a control section that determines one of a first reference signal and a second reference signal as a spatial relation of certain uplink transmission based on an implicit or explicit configuration, and determines a parameter related to power control of the certain uplink transmission, the first reference signal relating to Quasi-Co-Location (QCL), and the second reference signal being used to measure pathloss for the power control of the certain uplink transmission; and a transmission section that performs the certain uplink transmission according to the spatial relation.

FIG. 2

Printed by Jouve, 75001 PARIS (FR)

## Description

Technical Field

The present disclosure relates to a user terminal and a radio communication method of a next-generation mobile communication system.

Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), New Radio (NR) or 3GPP Rel. 15 or subsequent releases) are also studied.

In legacy LTE systems (e.g., LTE Rel. 8 to 14), a user terminal (UE: User Equipment) controls transmission of an uplink shared channel (e.g., Physical Uplink Shared Channel (PUSCH)) based on Downlink Control Information (DCI).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

It is studied for Uplink (UL) transmission such as a PUCCH, a PUSCH or an SRS in a future radio communication system (e.g., NR) that one of a plurality of beam (spatial relation) candidates configured by a higher layer signaling is indicated by, for example, a Medium Access Control (MAC) Control Element (CE) or Downlink Control Information (DCI).

However, the number of configurable candidates is limited. In a case where the number of candidates is reconfigured by the higher layer signaling to use more candidates, there is a risk that latency or resource waste occurs.

It is therefore one of objects of the present disclosure to provide a user terminal and a radio communication method that appropriately control a UL beam.

Solution to Problem

A user terminal according to one aspect of the present disclosure includes: a control section that determines one of a first reference signal and a second reference signal as a spatial relation of certain uplink transmission based on an implicit or explicit configuration, and determines a parameter related to power control of the certain uplink transmission, the first reference signal relating to Quasi-Co-Location (QCL), and the second reference signal being used to measure pathloss for the power control of the certain uplink transmission; and a transmission section that performs the certain uplink transmission according to the spatial relation.

Advantageous Effects of Invention

According to one aspect of the present disclosure, it is possible to appropriately control a UL beam.

Brief Description of Drawings

Fig. 1 is a diagram illustrating one example of a beam correspondence.
Fig, 2 is a diagram illustrating one example of a spatial relation of specific UL transmission.
Figs. 3A and 3B are diagrams illustrating one example of a QCL assumption of a PDSCH.
Fig. 4 is a diagram illustrating one example of a schematic configuration of a radio communication system according to one embodiment.

Fig. 5 is a diagram illustrating one example of a configuration of a base station according to the one embodiment.

Fig. 6 is a diagram illustrating one example of a configuration of a user terminal according to the one embodiment.

Fig. 7 is a diagram illustrating one example of hardware configurations of the base station and the user terminal according to the one embodiment.

Description of Embodiments

(TCI, Spatial Relation and QCL)

It is studied for NR to control UE's reception processing (e.g., at least one of reception, demapping, demodulation and decoding) and transmission processing (e.g., at least one of transmission, mapping, precoding, modulation and encoding) of at least one of a signal and a channel (that are expressed as a signal/channel) based on a Transmission Configuration Indication state (TCI state).

The TCI state may indicate an element that is applicable to a downlink signal/channel. An element corresponding to a TCI state applied to an uplink signal/channel may be expressed as a spatial relation.

The TCI state is information related to Quasi-Co-Location (QCL) of a signal/channel, and may be referred to as, for example, a spatial reception parameter or Spatial Relation Information (SRI). The TCI may be configured to the UE per channel or per signal.

QCL is an index that indicates a statistical property of a signal/channel. In a case where, for example, a certain signal/channel and another signal/channel have a QCL relation, the QCL relation may mean that it is possible to assume that at least one of a Doppler shift, a Doppler spread, an average delay, a delay spread and a spatial parameter (e.g., spatial reception parameter (spatial Rx parameter)) is identical (at least one of these parameters is quasi-co-located) between a plurality of these different signals/channels.

In addition, the spatial reception parameter may be associated with a UE reception beam (e.g., reception analog beam), and the beam may be specified based on spatial QCL. The QCL (or at least one element of the QCL) in the present disclosure may be read as spatial QCL (sQCL).

A plurality of types of QCL (QCL types) may be specified. For example, four QCL types A to D whose parameters (or parameter sets) that can be assumed identical are different may be provided, and the parameters are as follows:

- QCL type A: Doppler shift, Doppler spread, average delay and delay spread,
- QCL type B: Doppler shift and Doppler spread,
- QCL type C: Doppler shift and average delay, and
- QCL type D: spatial reception parameter.

A UE's assumption that a given Control Resource Set (CORESET), channel or reference signal has a specific QCL (e.g., QCL type D) relation with another CORESET, channel or reference signal may be referred to as a QCL assumption.

The UE may determine at least one of a transmission beam (Tx beam) and a reception beam (Rx beam) of the signal/channel based on a TCI state or the QCL assumption of the signal/channel.

The TCI state may be, for example, information related to QCL of a target channel (or a Reference Signal (RS) for the target channel) and another signal (e.g., another Downlink Reference Signal (DL-RS)). The TCI state may be configured (instructed) by a higher layer signaling, a physical layer signaling or a combination of these signalings.

In the present disclosure, the higher layer signaling may be one or a combination of, for example, a Radio Resource Control (RRC) signaling, a Medium Access Control (MAC) signaling and broadcast information.

The MAC signaling may use, for example, an MAC Control Element (MAC CE) or an MAC Protocol Data Unit (PDU). The broadcast information may be, for example, a Master Information Block (MIB), a System Information Block (SIB), Remaining Minimum System Information (RMSI) or Other System Information (OSI).

The physical layer signaling may be, for example, Downlink Control Information (DCI).

A channel to which the TCI state is configured (indicated) may be at least one of, for example, a Physical Downlink Shared Channel (PDSCH), a Physical Downlink Control Channel (PDCCH), a Physical Uplink Shared Channel (PUSCH) and a Physical Uplink Control Channel (PUCCH).

Furthermore, an RS (DL-RS) that has the QCL relation with the channel may be at least one of, for example, a Synchronization Signal Block (SSB), a Channel State Information Reference Signal (CSI-RS) and a Sounding Reference Signal (SRS). Alternatively, the DL-RS may be a CSI-RS (also referred to as a Tracking Reference Signal (TRS)) used for tracking, or a reference signal (also referred to as a QRS) used for QCL detection.

The SSB is a signal block including at least one of a Primary Synchronization Signal (PSS), a Secondary Synchronization Signal (SSS) and a Physical Broadcast Channel (PBCH). The SSB may be referred to as an SS/PBCH block.

An information element of the TCI state ("TCI-state IE" of RRC) configured by a higher layer signaling may include one or a plurality of pieces of QCL information ("QCL-Info"). The QCL information may include at least one of information (DL-RS related information) that relates to a DL-RS that is in a QCL relation, and information (QCL type information) that indicates a QCL type. The DL-RS related information may include information such as a DL-RS index (e.g., an SSB index or a Non-Zero-Power CSI-RS (NZP CSI-RS) resource Identifier (ID)), an index of a cell in which the RS is arranged, and an index of a Bandwidth Part (BWP) at which the RS is arranged.

<TCI State for PDCCH>

Information related to QCL of a PDCCH (or a DeModulation Reference Signal (DMRS) antenna port associated with the PDCCH) and a given DL-RS may be referred to as a TCI state for the PDCCH.

The UE may decide the TCI state for a UE-specific PDCCH (CORESET) based on a higher layer signaling. For example, one or a plurality of (K) TCI states may be configured to the UE per CORESET by an RRC signaling.

One of a plurality of TCI states configured by the RRC signaling may be activated for the UE per CORESET by an MAC CE. The MAC CE may be referred to as a TCI State Indication for a UE-specific PDCCH MAC CE. The UE may monitor the CORESET based on an active TCI state associated with the CORESET.

<TCI State for PDSCH>

Information related to QCL of a PDSCH (or a DMRS antenna port associated with the PDSCH) and a given DL-RS may be referred to as, for example, a TCI state for the PDSCH.

M (M ≥ 1) TCI states for PDSCHs (M pieces of QCL information for the PDSCHs) may be notified (configured) to the UE by a higher layer signaling. In addition, the number of TCI states M configured to the UE may be limited according to at least one of UE capability and a QCL type.

DCI used to schedule a PDSCH may include a given field (that may be referred to as, for example, a TCI field or a TCI state field) that indicates a TCI state for the PDSCH. The DCI may be used to schedule a PDSCH of one cell, and may be referred to as, for example, DL DCI, a DL assignment, a DCI format 1_0 and a DCI format 1_1.

Whether or not the TCI field is included in the DCI may be controlled based on information notified from a base station to the UE. The information may be information (e.g., TCI presence information, intra-DCI TCI presence information or a higher layer parameter TCI-PresentInDCI) that indicates whether the TCI field is present or absent in the DCI. The information may be configured to the UE by, for example, the higher layer signaling.

In a case where TCI states of more than 8 types are configured to the UE, the TCI states of 8 types or less may be activated (or indicated) by using an MAC CE. The MAC CE may be referred to as a TCI States Activation/Deactivation for UE-specific PDSCH MAC CE. The value of the TCI field in the DCI may indicate one of the TCI states activated by the MAC CE.

In a case where the TCI presence information that is set as "enabled" is configured to a CORESET for scheduling a PDSCH (a CORESET used for PDCCH transmission for scheduling a PDSCH) for the UE, the UE may assume that a TCI field is present in a DCI format 1_1 of the PDCCH transmitted on the CORESET.

In a case where the TCI presence information is not configured to the CORESET for scheduling the PDSCH, or the PDSCH is scheduled by the DCI format 1_0, and in a case where a time offset between reception of DL DCI (DCI for scheduling the PDSCH) and reception of a PDSCH associated with the DCI is a threshold or more, the UE may assume that a TCI state or a QCL assumption of the PDSCH is identical to a TCI state or a QCL assumption applied to the CORESET used for PDCCH transmission for scheduling the PDSCH to determine QCL of a PDSCH antenna port.

In a case where the TCI presence information is set as "enabled", and in a case where a TCI field in DCI in a Component Carrier (CC) for scheduling (PDSCH) indicates an activated TCI state in the CC to be scheduled or a DL BWP, and the PDSCH is scheduled by the DCI format 1_1, the UE may use a TCI that conforms to a value of a TCI field in a detected PDCCH including DCI to determine QCL of the PDSCH antenna port. In a case where a time offset between reception of DL DCI (for scheduling the PDSCH) and a PDSCH associated with the DCI (the PDSCH scheduled by the DCI) is a threshold or more, the UE may assume that a DM-RS port of a PDSCH of a serving cell is quasi-co-located with an RS in a TCI state related to a QCL type parameter given by an indicated TCI state.

In a case where a single slot PDSCH is configured to the UE, the indicated TCI state may be based on an activated TCI state in a slot including a scheduled PDSCH. In a case where a multiple slot PDSCH is configured to the UE, the indicated TCI state may be based on an activated TCI state in a first slot including a scheduled PDSCH, or the UE may expect that the indicated TCI state is identical across slots including the scheduled PDSCH. In a case where a CORESET associated with a search space set for cross-carrier scheduling is configured to the UE, and in a case where the TCI presence information is set as "enabled" to the CORESET for the UE, and at least one of TCI states configured to a serving cell scheduled by a search space set includes a QCL type D, the UE may assume that a time offset between a detected PDCCH and a PDSCH associated with the PDSCH is a threshold or more.

In both of a case where the intra-DCI TCI information (higher layer parameter TCI-PresentInDCI) is set as "enabled" in an RRC connected mode, and a case where the intra-DCI TCI information is not configured, and in a case where a time offset between reception of DL DCI (DCI for scheduling a PDSCH) and a corresponding PDSCH (the PDSCH scheduled by the DCI) is less than a threshold, the UE may assume that a DM-RS port of a PDSCH of a serving cell is quasi-co-located with an RS that relates to a QCL parameter used to indicate QCL of a PDCCH in a CORESET that includes a lowest CORESET-ID in a latest slot in which one or more CORESETs in an active BWP of the serving cell are monitored by the UE, and that is associated with a monitored search space.

The time offset between reception of the DL DCI and the PDSCH associated with the DCI may be referred to as a scheduling offset.

Furthermore, the above threshold may be referred to as, for example, a "Threshold", a "Threshold for offset between a DCI indicating a TCI state and a PDSCH scheduled by the DCI", "Threshold-Sched-Offset", "timeDuration-ForQCL", a scheduling offset threshold, a scheduling offset threshold or a QCL time duration.

The scheduling offset threshold may be based on UE capability, or may be based on latency relative to, for example, decoding of a PDCCH and beam switching. Information of the scheduling offset threshold may be configured by the base station by using a higher layer signaling, or may be transmitted from the UE to the base station.

For example, the UE may assume that the DMRS port of the above PDSCH is quasi-co-located with a DL-RS that is based on the TCI state activated for the CORESET associated with the above lowest CORESET-ID. The latest slot may be, for example, a slot for receiving DCI for scheduling the above PDSCH.

In addition, the CORESET-ID may be an ID (an ID for identifying a CORESET) configured by an RRC information element "ControlResourceSet".

<Spatial Relation for PUCCH>

A parameter (PUCCH configuration information or PUCCH-Config) used for PUCCH transmission may be configured to the UE by a higher layer signaling (e.g., Radio Resource Control (RRC) signaling). The PUCCH configuration information may be configured per partial band (e.g., uplink Bandwidth Part (BWP)) in a carrier (also referred to as, for example, a cell or a component carrier).

The PUCCH configuration information may include a PUCCH resource set information (e.g., PUCCH-Resource-Set) list, and a PUCCH spatial relation information (e.g., PUCCH-SpatialRelationInfo) list.

The PUCCH resource set information may include a PUCCH resource index (an ID such as PUCCH-ResourceId) list (e.g., resourceList).

Furthermore, in a case where the UE does not have dedicated PUCCH resource configuration information (e.g., dedicated PUCCH resource configuration) provided by the PUCCH resource set information in the PUCCH configuration information (before RRC setup), the UE may determine a PUCCH resource set based on a parameter (e.g., pucch-ResourceCommon) in system information (e.g., a System Information Block Type1 (SIB1) or Remaining Minimum System Information (RMSI)). The PUCCH resource set may include 16 PUCCH resources.

On the other hand, in a case where the UE has the above dedicated PUCCH resource configuration information (a UE-dedicated uplink control channel configuration or a dedicated PUCCH resource configuration (after RRC setup), the UE may determine a PUCCH resource set according to the number of UCI information bits.

Based on at least one of a value of a given field (e.g., PUCCH resource indicator field) in Downlink Control Information (DCI) (e.g., the DCI format 1_0 or 1_1 used for scheduling of a PDSCH), the number of CCEs ($N_{CCE}$) in a COntrol REsource SET (CORESET) for reception of a PDCCH that carries the DCI, and an index ($n_{CCE, 0}$) of a beginning (first) CCE of the PDCCH reception, the UE may determine one PUCCH resource (index) in the above PUCCH resource set (e.g., a PUCCH resource set that is determined specifically for a cell or in a dedicated manner for the UE).

The PUCCH spatial relation information (e.g., RRC information element "PUCCH-spatialRelationInfo") may indicate a plurality of candidate beams (spatial domain filters) for PUCCH transmission. The PUCCH spatial relation information may indicate a spatial association between a Reference Signal (RS) and a PUCCH.

The PUCCH spatial relation information list may include some elements (PUCCH spatial relation information Information Element (IE)). Each PUCCH spatial relation information may include at least one of, for example, a PUCCH spatial relation information index (an ID such as pucch-SpatialRelationInfoId), a serving cell index (an ID such as servingCellId), and information related to an RS (reference RS) having a spatial relation with each PUCCH.

For example, the information related to the RS may be an SSB index and a CSI-RS index (e.g., NZP-CSI-RS resource configuration ID), or an SRS resource ID and a BWP ID. The SSB index, the CSI-RS index and the SRS resource ID may be associated with at least one of a beam, a resource and a port selected by measuring a corresponding RS.

One of one or more pieces of PUCCH spatial relation information (e.g., PUCCH-SpatialRelationInfo or candidate beams) in the PUCCH spatial relation information list may be indicated to the UE by a Medium Access Control (MAC) Control Element (CE). The MAC CE may be an MAC CE (a PUCCH spatial information activation/deactivation MAC CE or a PUCCH spatial relation information indication MAC CE) for activating or deactivating the PUCCH spatial relation information.

3 ms after transmitting Acknowledgement (ACK) for an MAC CE for activating given PUCCH spatial relation information, the UE may activate the PUCCH relation information indicated by the MAC CE.

The UE may control PUCCH transmission based on the PUCCH spatial relation information activated by the MAC CE. In addition, in a case where the PUCCH spatial relation information list includes single PUCCH spatial relation information, the UE may control PUCCH transmission based on the PUCCH spatial relation information.

<Spatial Relations for SRS and PUSCH>

The UE may receive information (SRS configuration information such as a parameter in the RRC control element "SRS-Config") used for transmission of a measurement reference signal (e.g., Sounding Reference Signal (SRS)).

More specifically, the UE may receive at least one of information related to one or a plurality of SRS resource sets (SRS resource set information such as the RRC control element "SRS-ResourceSet"), and information related to one or a plurality of SRS resources (SRS resource information such as the RRC control element "SRS-Resource").

One SRS resource set may be associated with a given number of SRS resources (the one SRS resource set may be obtained by grouping the given number of SRS resources). Each SRS resource may be specified based on an SRS Resource Indicator (SRI) or an SRS resource Identifier (ID).

The SRS resource set information may include SRS resource set IDs (SRS-ResourceSetId), a list of SRS resource IDs (SRS-ResourceId) used for the resource set, an SRS resource type (e.g., one of a Periodic SRS, a Semi-Persistent SRS and an Aperiodic SRS), and information of SRS usage.

In this regard, the SRS resource type may indicate one of a Periodic SRS (P-SRS), a Semi-Persistent SRS (SP-SRS), and an Aperiodic SRS (A-SRS). In addition, the UE may transmit the P-SRS and the SP-SRS periodically (or periodically after activation), and transmit the A-SRS based on an SRS request of DCI.

Furthermore, the usage (an RRC parameter "usage" or a Layer-1 (LI) parameter "SRS-SetUse") may be, for example, beam management, a Codebook (CB), a NonCodebook (NCB) or antenna switching. An SRS used for the codebook or the noncodebook may be used to determine a precoder of codebook-based or noncodebook-based PUSCH transmission based on an SRI.

For example, in a case of the codebook-based transmission, the UE may determine the precoder for PUSCH transmission based on an SRI, a Transmitted Rank Indicator (TRI), and a Transmitted Precoding Matrix Indicator (TPMI). In a case of the noncodebook-based transmission, the UE may determine the precoder for PUSCH transmission based on the SRI.

The SRS resource information may include SRS resource IDs (SRS-ResourceId), the number of SRS ports, SRS port numbers, transmission Comb, SRS resource mapping (e.g., time and/or frequency resource positions, a resource offset, a resource periodicity, a repetition factor, the number of SRS symbols and an SRS bandwidth), hopping related information, an SRS resource type, sequence IDs and SRS spatial relation information.

The SRS spatial relation information (e.g., RRC information element "spatialRelationInfo") may indicate spatial relation information between a given reference signal and the SRS. The given reference signal may be at least one of a Synchronization Signal/Physical Broadcast Channel (SS/PBCH) block, a Channel State Information Reference Signal (CSI-RS) and an SRS (e.g., another SRS). The SS/PBCH block may be referred to as a Synchronization Signal Block (SSB).

The SRS spatial relation information may include at least one of an SSB index, a CSI-RS resource ID and an SRS resource ID as an index of the above given reference signal.

In addition, in the present disclosure, the SSB index, the SSB resource ID and an SSB Resource Indicator (SSBRI) may be interchangeably read. Furthermore, the CSI-RS index, the CSI-RS resource ID and a CSI-RS Resource Indicator (CRI) may be interchangeably read. Furthermore, the SRS index, the SRS resource ID and the SRI may be interchangeably read.

The SRS spatial relation information may include, for example, a serving cell index and a BWP index (BWP ID) associated with the given reference signal.

According to NR, transmission of an uplink signal may be controlled based on whether or not there is a Beam Correspondence (BC). The BC may be, for example, capability of a certain node (e.g., the base station or the UE) for determining a beam (a transmission beam or a Tx beam) used for transmission of a signal based on a beam (a reception beam or an Rx beam) used for reception of the signal.

In addition, the BC may be referred to as a transmission/reception beam correspondence (Tx/Rx beam correspondence), beam reciprocity, beam calibration, calibrated/non-calibrated, reciprocity calibrated/non-calibrated, a correspondence degree or a match degree.

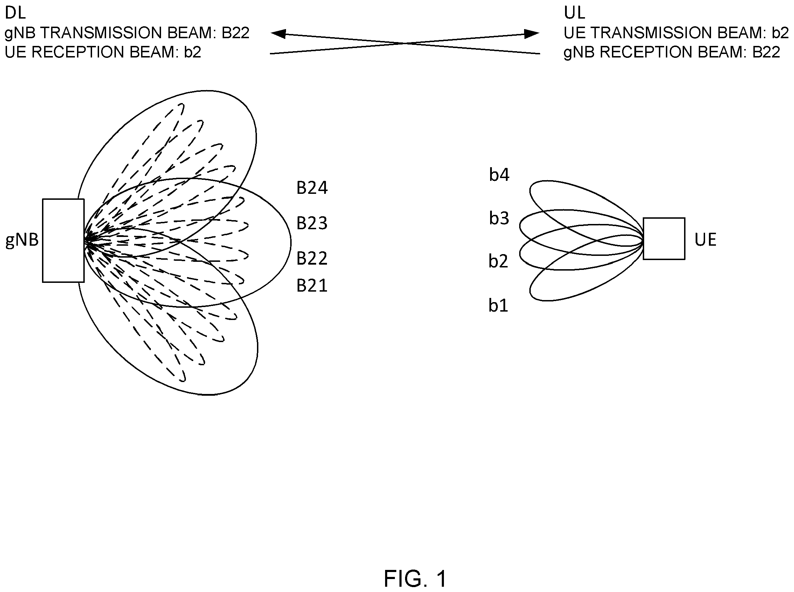

As illustrated in Fig. 1, according to the BC, a gNB performs transmission beam sweeping using beams B21 to B24, and the UE performs reception beam sweeping using beams b1 to b4, so that the gNB and the UE determine the beam B22 of the gNB as a DL transmission beam based on a measurement result, and determine the beam b2 of the UE as a DL reception beam. The gNB uses the determined beam B22 as a UL reception beam, too, and the UE may use the determined beam b2 as a UL transmission beam.

In, for example, a case where there is not the BC, the UE may transmit an uplink signal (e.g., a PUSCH, a PUCCH or an SRS) by using a beam (spatial domain transmission filter) that is identical to an SRS (or an SRS resource) indicated by the base station based on a measurement result of one or more SRSs (or SRS resources).

On the other hand, in a case where there is the BC, the UE may transmit an uplink signal (e.g., a PUSCH, a PUCCH or an SRS) by using a beam (spatial domain transmission filter) that is identical or corresponds to a beam (spatial domain reception filter) used for reception of a given SSB or CSI-RS (or CSI-RS resource).

In a case where spatial relation information related to an SSB or a CSI-RS, and an SRS is configured for a certain SRS resource (in a case where, for example, there is the BC), the UE may transmit an SRS resource by using the same spatial domain filter (spatial domain transmission filter) as the spatial domain filter (spatial domain reception filter) for reception of the SSB or CSI-RS. In this case, the UE may assume that the UE reception beam of the SSB or the CSI-RS and the UE transmission beam of the SRS are the same.

In a case where spatial relation information related to another SRS (reference SRS) and the SRS (target SRS) is configured for a certain SRS (target SRS) resource (in the case where, for example, there is not the BC), the UE may transmit the target SRS resource by using the same spatial domain filter (spatial domain transmission filter) as the spatial domain filter (spatial domain transmission filter) for transmission of the reference SRS. That is, in this case, the UE may assume that the UE transmission beam of the reference SRS and the UE transmission beam of the target SRS are the same.

The UE may determine a spatial relation of a PUSCH scheduled by DCI based on a value of a given field (e.g., SRS Resource Indicator (SRI) field) in the DCI (e.g., DCI format 0_1). More specifically, the UE may use spatial relation information (e.g., RRC information element "spatialRelationInfo") of an SRS resource determined based on the given field value (e.g., SRI) for PUSCH transmission.

(Multiple TRPs)

It is studied for NR that one or a plurality of Transmission/Reception Points (TRPs) (multiple TRPs) perform DL transmission for the UE by using one or a plurality of panels (multiple panels). Furthermore, it is studied that the UE performs UL transmission for one or a plurality of TRPs.

In addition, a plurality of TRPs may be associated with the same cell Identifier (ID), or may be associated with different cell IDs. The cell ID may be a physical cell ID or may be a virtual cell ID.

Each TRP of the multiple TRPs may transmit a respectively different Code Word (CW) and a respectively different layer. Non-Coherent Joint Transmission (NCJT) is studied as one mode of multiple TRP transmission.

According to NCJT, for example, a TRP 1 modulates, maps and performs layer mapping on a first code word, uses first precoding for a first number of layers (e.g., 2 layers), and thereby transmits a first PDSCH. Furthermore, the TRP 2 modulates, maps and performs layer mapping on a second code word, uses second precoding for a second number of layers (e.g., 2 layers), and thereby transmits a second PDSCH. It may be assumed that these first PDSCH and second PDSCH do not have a Quasi-Co-Location (QCL) relation (are not quasi-co-located).

In addition, it may be defined that a plurality of PDSCHs to be subjected to NCJT partially or completely overlap at least one of time and frequency domains. That is, the first PDSCH from the first TRP, the second PDSCH from the second TRP and at least one of the time and frequency resources may overlap.

By the way, separate HARQ-ACK is studied as one of Hybrid Automatic Repeat reQuest ACKnowledgement (HARQ-ACK) feedbacks for multiple PDSCHs.

The separate HARQ-ACK corresponds to feedback for transmitting HARQ-ACK per TRP in pluralities of Physical Uplink Control Channel (PUCCH))/Physical Uplink Shared Channel (PUSCH) resources. These pluralities of PUCCH/PUSCH resources may overlap (may be simultaneously transmitted) or may not overlap.

In addition, the PUCCH/PUSCH may mean at least one of the PUCCH and the PUSCH (hereinafter, "A/B" may be read as "at least one of A and B" likewise).

DCI for scheduling multiple PDSCHs may include a field of a PUCCH Resource Indicator (PRI). The PRI may correspond to information that indicates a resource for transmitting HARQ-ACK associated with a PDSCH, and may be referred to as an ACK/NACK Resource Indicator (ARI).

The UE may decide PUCCH resources for transmitting HARQ-ACKs associated with the above multiple PDSCHs based on the PRI.

By using separate HARQ-ACK, it is possible to independently transmit HARQ-ACK per TRP. In a case where backhaul latency between TRPs is great (for example, TRPs are connected by a non ideal backhaul), HARQ latency does not become great.

A PUCCH resource of separate HARQ-ACK for each TRP may be configured to or may be configured to not be permitted to temporarily overlap. It is studied to define a PUCCH resource group to flexibly control PUCCH resources of separate HARQ-ACKs.

For example, the UE to which the PUCCH resource group is configured by a network may assume that all PUCCH resources included in a first PUCCH resource group do not temporarily overlap all PUCCH resources included in a second PUCCH resource group. Furthermore, a PUCCH resource group may not be explicitly configured by the network, and the UE may regard PUCCH resources configured by the network as the PUCCH resource group by grouping PUCCH resources according to a given rule. The UE may group corresponding PUCCH resources based on a value of a PUCCH resource indicator field in received DCI. For example, the UE may group the corresponding PUCCH resources according to whether a given bit position (e.g., a most significant bit or a least significant bit) of the value of the PUCCH resource indicator field (e.g., 000 to 111) is 1 or 0. Furthermore, the UE may group the corresponding PUCCH resources based on PUCCH resource IDs configured by a higher layer signaling by the network. For example, the UE may group the corresponding PUCCH resources according to whether the PUCCH resource IDs are odd numbers or even numbers or whether the PUCCH resource IDs are larger or smaller than a given value.

Separate HARQ-ACK feedback may be supported for multiple TRP transmission. Spatial relation information may be indicated or updated per PUCCH resource group.

1 or more PUCCH resource groups may be configured in a PUCCH resource set. Each PUCCH resource group may be assigned an ID.

The "group" in the present disclosure may be read as grouping, a sequence, a list and a set. Furthermore, the resource group may be read as one or a plurality of resources.

(Transmit Power Control for PUCCH)

Furthermore, according to NR, PUCCH transmit power is controlled based on a TPC command (also referred to as, for example, a value, an increase/decrease value, a correction value or an indication value) indicated by a value of a given field (also referred to as, for example, a TPC command field or a first field) in DCI.

For example, PUCCH transmit power ($P_{PUCCH, b, f, c}(i, q_u, q_d, l)$) in a transmission occasion (also referred to as, for example, a transmission duration) i of a BWP b of a carrier f of a cell c that uses an index 1 of a power control adjustment state may be expressed by following equation (1).

In this regard, whether the power control adjustment state includes a plurality of states (2 states) or includes a single state may be configured by a higher layer parameter. Furthermore, in a case where a plurality of power control adjustment states are configured, one of a plurality of these power control adjustment states may be identified based on the index l (e.g., $l \in \{0, 1\}$). The power control adjustment state may be referred to as, for example, a PUCCH power control adjustment state or a first or second state.

Furthermore, the transmission occasion i of the PUCCH is a given duration in which the PUCCH is transmitted, and may include, for example, one or more symbols or one or more slots.

[Mathematical 1]

Equation (1)

$$P_{\text{PUCCH},b,f,c}(i,q_u,q_d,l) =$$

$$\min\begin{cases} P_{\text{CMAX},f,c}(i), \\ P_{\text{O\_PUCCH},b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{cases}$$

In equation (1), $P_{CMAX, f, c}(i)$ represents, for example, transmit power (also referred to as, for example, maximum transmit power) of the user terminal configured for the carrier f of the cell c in the transmission occasion i. $P_{O\_PUCCH, b, f, c}(q_u)$ represents, for example, a parameter (also referred to as, for example, a parameter related to a transmit power offset, a transmit power offset P0 or a target receive power parameter) related to target receive power configured for the BWP b of the carrier f of the cell c in the transmission occasion i.

$M_{RB, b, f, c}^{PUCCH}(i)$ represents, for example, the number of resource blocks (bandwidth) allocated to a PUCCH for the transmission occasion i in the uplink BWP b of the carrier f of the cell c and a subcarrier spacing $\mu$. $PL_{b, f, c}(q_d)$ represents, for example, pathloss calculated by the user terminal by using an index $q_d$ of a reference signal for a downlink BWP (a pathloss measurement DL RS such as PUCCH-PathlossReferenceRS) associated with the uplink BWP b of the carrier f of the cell c.

$\Delta_{F\_PUCCH}(F)$ represents a higher layer parameter given per PUCCH format. $\Delta_{TF, b, f, c}(i)$ represents a transmission power adjustment component (offset) for the uplink BWP b of the carrier f of the cell c.

$g_{b, f, c}(i, 1)$ represents a value (e.g., a power control adjustment state or a cumulative value of TPC commands) based on a TPC command of the above power control adjustment state index 1 of the uplink BWP of the carrier f of the cell c and the transmission duration i. For example, the cumulative value of the TPC commands may be expressed by equation (2).

[Mathematical 2]

Equation (2)

$$g_{b,f,c}(i,l) = g_{b,f,c}(i_{last},l) + \delta_{\text{PUCCH},b,f,c}(i_{last},i,K_{\text{PUCCH}},l)$$

In equation (2), $\delta_{\text{PUCCH}, b, f, c}(i_{last}, i, K_{\text{PUCCH}}, 1)$ may represent, for example, a TPC command indicated by a TPC command field value in DCI (e.g., DCI format 1_0 or 1_1) detected in the uplink BWP b of the carrier f of the cell c for the transmission occasion i after a transmission duration iiast of a last PUCCH, or may represent a TPC command indicated by a TPC command field value in DCI (e.g., DCI format 2_2) that includes a CRC parity bit scrambled (CRC-scrambled) by a specific Radio Network Temporary Identifier (RNTI) (e.g., TPC-PUCCH-RNTI).

In addition, equations (1) and (2) are only exemplary, and are not limited to these. The user terminal may control PUCCH transmit power based on at least one parameter exemplified in equations (1) and (2). Additional parameters may be included, or part of parameters may be omitted. Furthermore, according to above equations (1) and (2), PUCCH transmit power is controlled per BWP of a certain carrier of a certain cell. However, above equations (1) and (2) are not limited to these. At least part of a cell, a carrier, a BWP and a power control adjustment state may be omitted.

(Transmit Power Control for PUSCH)

According to NR, PUSCH transmit power is controlled based on a TPC command (also referred to as, for example, a value, an increase/decrease value or a correction value) indicated by a value of the given field (also referred to as, for example, the TPC command field or the first field) in the DCI.

In a case where, for example, the UE transmits a PUSCH in the BWP b of the carrier f of the cell c by using a parameter set (open loop parameter set) including an index j and the power control adjustment state index 1, PUSCH transmit power ($P_{\text{PUSCH}, b, f, c}(i, j, q_d, l)$) in the PUSCH transmission occasion (also referred to as, for example, a transmission duration) i may be expressed by following equation (3).

In this regard, whether the power control adjustment state includes a plurality of states (2 states) or includes a single state may be configured by a higher layer parameter. Furthermore, in a case where a plurality of power control adjustment states are configured, one of a plurality of these power control adjustment states may be identified based on the index l (e.g., $l \in \{0, 1\}$). The power control adjustment state may be referred to as, for example, the PUSCH power control adjustment state or the first or second state.

Furthermore, the transmission occasion i of the PUSCH is a given duration in which the PUSCH is transmitted, and may include, for example, one or more symbols or one or more slots.

[Mathematical 3]

Equation (3)

$$P_{\text{PUSCH},b,f,c}(i, j, q_d, l) =$$

$$\min\left\{ \begin{array}{l} P_{\text{CMAX},f,c}(i), \\ P_{\text{O\_PUSCH},b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\}$$

In equation (3), $P_{\text{CMAX}, f, c}(i)$ represents, for example, transmit power (also referred to as, for example, maximum transmit power) of the user terminal configured for the carrier f of the cell c in the transmission occasion i. $P_{\text{O\_PUSCH}, b, f, c}(j)$ represents, for example, a parameter (also referred to as, for example, a parameter related to a transmit power offset, the transmit power offset P0 or a target receive power parameter) related to target receive power configured for the BWP b of the carrier f of the cell c in the transmission occasion i.

$M_{\text{RB}, b, f, c}^{\text{PUSCH}}(i)$ represents, for example, the number of resource blocks (bandwidth) allocated to a PUSCH for the transmission occasion i in the uplink BWP b of the carrier f of the cell c and the subcarrier spacing $\mu$. $\alpha_{b, f, c}(j)$ represents a value (also referred to as, for example, msg3-Alpha, p0-PUSCH-Alpha or a fractional factor) provided by a higher layer parameter.

$PL_{b, f, c}(q_d)$ represents, for example, pathloss (pathloss compensation) calculated by the user terminal by using the index $q_d$ of a reference signal for a downlink BWP (a pathloss measurement DL RS such as PUSCH-PathlossReferenceRS) associated with the uplink BWP b of the carrier f of the cell c.

$\Delta_{TF, b, f, c}(i)$ represents a transmission power adjustment component (an offset or transmission format compensation) for the uplink BWP b of the carrier f of the cell c.

$f_{b, f, c}(i, l)$ represents a value (e.g., a power control adjustment state, a cumulative value of TPC commands or a value provided by a closed loop) based on a TPC command of the above power control adjustment state index 1 of the uplink BWP of the carrier f of the cell c and the transmission duration i. For example, the cumulative value of the TPC commands may be expressed by equation (4).

[Mathematical 4]

Equation (4)

$$f_{b,f,c}(i,l) = f_{b,f,c}(i_{last},l) + \delta_{PUSCH,b,f,c}(i_{last},i,K_{PUSCH},l)$$

In equation (4), $\delta_{PUSCH, b, f, c}(i_{last}, i, K_{PUSCH}, l)$ may represent, for example, a TPC command indicated by a TPC command field value in DCI (e.g., DCI format 1_0 or 1_1) detected in the uplink BWP b of the carrier f of the cell c for the transmission occasion i after the transmission duration iiast of a last PUSCH, or may represent a TPC command indicated by a TPC command field value in DCI (e.g., DCI format 2_2) that includes a CRC parity bit scrambled (CRC-scrambled) by a specific Radio Network Temporary Identifier (RNTI) (e.g., TPC-PUSCH-RNTI).

In addition, equations (3) and (4) are only exemplary, and are not limited to these. The user terminal only needs to control PUSCH transmit power based on at least one parameter exemplified in equations (3) and (4). Additional parameters may be included, or part of parameters may be omitted. Furthermore, according to above equations (3) and (4), PUSCH transmit power is controlled per BWP of a certain carrier of a certain cell. However, above equations (3) and (4) are not limited to these. At least part of a cell, a carrier, a BWP and a power control adjustment state may be omitted.

In a case where a pathloss measurement DL RS (e.g., PUSCH-PathlossReferenceRS) is not provided for the UE, or in a case where a dedicated higher layer parameter is not provided for the UE, the UE may calculate $PL_{b, f, c}(q_d)$ by using an RS resource from an SSB used to obtain a Master Information Block (MIB).

In a case where RS resource indices the number of which is up to a value of the maximum number of pathloss measurement DL RSs (e.g., maxNrofPUSCH-PathlossReferenceRS) and each RS configuration set for an RS resource index are configured to the UE by the pathloss measurement DL RSs, the RS resource index set may include one or both of an SS/PBCH block index set and a CSI-RS resource index set. The UE may identify the RS resource index $q_d$ in the RS resource index set.

In a case where PUSCH transmission is scheduled by a Random Access Response (RAR) UL grant, the UE may use the same RS resource index $q_d$ as that of corresponding PRACH transmission.

In a case where an SRI PUSCH transmit power control configuration (e.g., SRI-PUSCH-PowerControl) is provided, and in a case where values equal to or more than 1 of pathloss measurement DL RS IDs are provided, the UE may obtain mapping between a set of values for an SRI field in the DCI format 0_1 and a set of the pathloss measurement DL RS ID values from a higher layer signaling (e.g., sri-PUSCH-PowerControl-Id in SRI-PUSCH-Power-Control). The UE may determine the RS resource index $q_d$ from the pathloss DL RS IDs mapped on the SRI field values in the DCI format 0_1 for scheduling a PUSCH.

In a case where PUSCH transmission is scheduled by the DCI format 0_0, and PUCCH spatial relation information for a PUCCH resource having a lowest index in the active UL BWP b of each carrier f and the serving cell c is not provided to the UE, the UE may use the same RS resource index $q_d$ as that of PUCCH transmission in the PUCCH resource.

In a case where PUSCH transmission is scheduled by the DCI format 0_0, and a spatial setting of PUCCH transmission is not provided to the UE, or in a case where PUSCH transmission is scheduled by the DCI format 0_1 that does not include an SRI field, or in a case where an SRI PUSCH power control configuration is not provided to the UE, the UE may use the RS resource index $q_d$ having 0 of a pathloss measurement DL RS ID.

In a case where a configured grant configuration includes a given parameter (e.g., rrc-CofiguredUplinkGrant) for PUSCH transmission configured by the configured grant configuration (e.g., ConfiguredGrantConfig), the RS resource index $q_d$ may be provided to the UE based on a pathloss reference index (e.g., pathlossReferenceIndex) in a given parameter.

In a case where the configured grant configuration does not include the given parameter for PUSCH transmission configured by the configured grant configuration, the UE may determine the RS resource index $q_d$ from a value of a pathloss measurement DL RS ID mapped on an SRI field in a DCI format for activating PUSCH transmission. In a case where a DCI format does not include an SRI field, the UE may determine the RS resource index $q_d$ having 0 of the pathloss measurement DL RS ID.

(Spatial Relation Determination Method)

As described above, a plurality of TCI states for a PDCCH or a PDSCH may be configured to the UE by RRC, and one of a plurality of TCI states may be indicated to the UE by an MAC CE or DCI. Consequently, it is possible to quickly switch a beam without performing RRC reconfiguration.

A maximum number of TCI states (maxNrofTCI-States) that can be configured by RRC is 128, and a maximum number of TCI states (maxNrofTCI-StatesPDCCH) for a PDCCH is 64.

Eight spatial relations for one PUCCH resource for a PUCCH may be configured to the UE by RRC, and one spatial relation may be indicated to the UE by an MAC CE. To use spatial relations other than the eight spatial relations configured by RRC, the RRC reconfiguration is necessary.

In a case where codebook-based transmission is used for a PUSCH, two SRS resources may be configured to the UE by RRC, and one of the two SRS resources may be indicated to the UE by DCI (1-bit field). In a case where noncodebook-based transmission is used for a PUSCH, four SRS resources may be configured to the UE by RRC, and one of the four SRS resources may be indicated to the UE by DCI (2-bit field). To use spatial relations other than the two or four spatial relations configured by RRC, the RRC reconfiguration is necessary.

A DL-RS can be configured to a spatial relation of an SRS resource used for a PUSCH. Spatial relations of a plurality of (e.g., up to 16) SRS resources for an SP-SRS can be configured to the UE by RRC, and one of a plurality of SRS resources can be indicated to the UE by an MAC CE. A spatial relation of an SRS resource for an A-SRS and a P-SRS cannot be indicated to the UE by an MAC CE.

Thus, there is a probability that it is necessary to configure many spatial relation candidates at a time as spatial relations for UL transmission (a PUCCH, a PUSCH or an SRS). In a case where, for example, a DL-RS (a TCI state on DL) is used as a spatial relation of UL transmission according to a beam correspondence, there is a probability that many DL-RSs (e.g., 32 SSBs) are configured.

However, as described above, the number of spatial relation candidates that can be configured at a time to UL transmission is limited, and is smaller than the number of TCI state candidates that can be configured at a time to DL transmission. It is conceived to configure another spatial relation by RRC reconfiguration to use a spatial relation that is not configured for UL transmission. Performing the RRC reconfiguration generates a time during which communication is impossible and wastes resources, and there is a risk that system performance deteriorates.

Hence, the inventors of the present invention have conceived a method where the UE assumes that a spatial relation of specific uplink transmission is identical to a Transmission Control Indication (TCI) state or a Quasi-Co-Location (QCL) assumption of a specific downlink channel.

Furthermore, while the UE determines the spatial relation of the specific uplink transmission, how the UE determines a power control parameter of the specific uplink transmission is not clear.

Hence, the inventors of the present invention have conceived a method where the UE determines a spatial relation of specific uplink transmission and a power control parameter.

Embodiments according to the present disclosure will be described in detail below with reference to the drawings. A radio communication method according to each embodiment may be each applied alone or may be applied in combination.

In the present disclosure, a spatial relation may be read as, for example, spatial relation information, a spatial relation assumption, a spatial domain transmission filter, a UE spatial domain transmission filter, a spatial domain filter, a UE transmission beam, a UL transmission beam, a DL-RS, a QCL assumption, an SRI, and a spatial relation based on an SRI.

The TCI state may be read as, for example, a TCI state or a QCL assumption, a QCL assumption, a spatial domain reception filter, a UE spatial domain reception filter, a spatial domain filter, a UE reception beam, a DL reception beam and a DL-RS. An RS of the QCL type D, a DL-RS associated with the QCL type D, a DL-RS having the QCL type D, a DL-RS source, an SSB and a CSI-RS may be interchangeably read.

In the present disclosure, the TCI state may be information (e.g., a DL-RS, a QCL type or a cell to which a DL-RS is transmitted) related to a reception beam (spatial domain reception filter) indicated (configured) to the UE. The QCL assumption may be information (e.g., a DL-RS, a QCL type or a cell to which a DL-RS is transmitted) related to a reception beam (spatial domain reception filter) assumed by the UE based on transmission or reception of an associated signal (e.g., PRACH).

In the present disclosure, a PCell, a Primary Secondary Cell (PSCell) and a Special Cell (SpCell) may be interchangeably read.

In the present disclosure, x or more and more than x may be interchangeably read. In the present disclosure, less than x and x or less may be interchangeably read.

(Radio Communication Method)

<Embodiment 1>

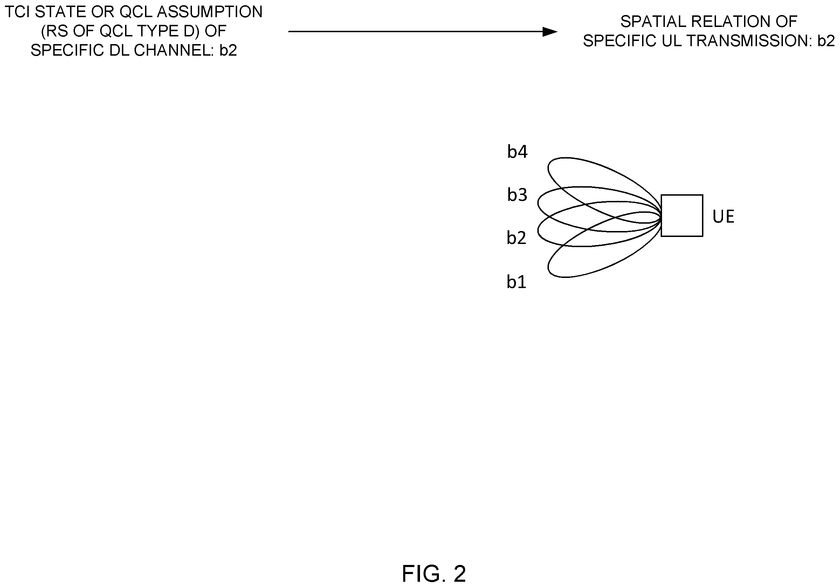

A UE may use a default spatial relation or a spatial relation of reference UL transmission as a spatial relation of specific UL transmission. The UE may assume (regard) that the spatial relation of the specific UL transmission is identical to that of an RS of the default spatial relation or an RS of the spatial relation of the reference UL transmission.
The specific UL transmission may be read as a specific UL signal or a specific UL channel, or may be read as at least one of a PUSCH, a PUCCH, an SRS, an SRS resource set whose usage is codebook-based transmission (codebook) or noncodebook-based transmission (nonCodebook) (i.e., that includes usage information (usage) that indicates codebook-based transmission (codebook) or noncodebook-based transmission (nonCodebook)), an SRS resource in an SRS resource set whose usage is codebook-based transmission or noncodebook-based transmission.
A spatial relation of specific UL transmission, an RS of a spatial relation of specific UL transmission, a spatial relation of SRS configuration information, PUCCH spatial relation information, a spatial relation of a PUSCH, spatial relation information of specific UL transmission, an RS of a spatial relation of specific UL transmission, and a spatial domain transmission filter of specific UL transmission may be interchangeably read. In a case where the specific UL transmission is a PUSCH, the spatial relation of the specific UL transmission may be read as an SRI, a spatial relation of the SRI and a spatial domain transmission filter.
A default spatial relation, a specific RS, a TCI state or a QCL assumption of specific DL transmission, an RS related to a QCL parameter (QCL parameter) given by the TCI state or the QCL assumption of the specific DL transmission, and an RS of a QCL type D in the TCI state or the QCL assumption of the specific DL transmission may be interchangeably read.
The specific DL transmission may be read as at least one of a specific DL channel, a specific RS, a specific DL RS, a PDCCH and a PDSCH.
Reference UL transmission may be UL transmission that satisfies given conditions, may be latest PUSCH transmission, may be latest PUCCH transmission, may be latest PRACH transmission, may be latest SRS transmission, may be latest UL transmission, or may be latest transmission of at least one of a PUSCH, a PUCCH, a PRACH and an SRS.
As an RS of a spatial relation of specific UL transmission for determining a UL transmission beam (spatial domain transmission filter), it is preferable to use an RS of a QCL type D in a TCI state or a QCL assumption of specific DL transmission for determining a UE reception beam (spatial domain reception filter). Particularly in a case where the TCI state or the QCL assumption of the specific DL transmission includes both of an RS of a QCL type A and an RS of the QCL type D, and the RS of the QCL type A and the RS of the QCL type D are different from each other, it is preferable to use the RS of the QCL type D in the TCI state or the QCL assumption of the specific DL transmission as the RS of the spatial relation of the specific UL transmission.
In a case where, for example, the TCI state indicates the RS of the QCL type A that is a TRS of a serving cell (e.g., SCell) to which the TCI state has been configured, and the RS of the QCL type D that is a CSI-RS of another serving cell (e.g., PCell) to which repetition has been configured as described above, the RS of the QCL type A and the RS of the QCL type D are different from each other. It is supposed that a parameter of the QCL type A is different per cell, and therefore the RS of the QCL type A is preferably transmitted in a cell to which the TCI state has been configured. On the other hand, the RS of the QCL type D may be transmitted in a serving cell other than the cell to which the TCI state has been configured. In addition, the serving cell to which the TCI state has been configured may be a PCell, or a serving cell to which the RS of the QCL type D is transmitted may be an SCell.
As illustrated in Fig. 2, the UE may use an RS of the QCL type D in a TCI state of specific DL transmission (e.g., a DL-RS, a spatial domain reception filter, a spatial domain filter or a UE reception beam) as an RS of a spatial relation of specific UL transmission (e.g., a DL-RS, a spatial domain transmission filter, a spatial domain filter or a UE transmission beam).

<<Condition to Apply Default Spatial Relation>>

In a case where the UE is implicitly or explicitly configured to use a default spatial relation as a spatial relation of specific UL transmission, the UE may use the default spatial relation as the spatial relation of the specific UL transmission (the UE may assume that the spatial relation of the specific UL transmission is identical to the default spatial relation). A case where the UE is implicitly configured to use the default spatial relation as the spatial relation of the specific UL transmission may be, for example, a case where the spatial relation of the specific UL transmission (e.g., spatialRelationInfo or PUCCH-SpatialRelationInfo) is not configured to the UE. A case where the UE is explicitly configured to use the default spatial relation as the spatial relation of the specific UL transmission may be a case where a specific parameter is configured by a specific higher layer parameter.
In a Frequency Range 1 (an FR 1 that is a frequency equal to or less than 6 GHz), the UE may not use analog beam forming for UL transmission, or a spatial relation may not be configured to the UL transmission.

In a Frequency Range 2 (an FR 2 that is a frequency higher than 6 GHz (or a frequency higher than 24 GHz)), the UE may assume that the spatial relation of the specific UL transmission is identical to the default spatial relation (an RS of the spatial relation of the specific UL transmission is identical to an RS of the QCL type D in the TCI state of specific DL transmission). In a case where the UE is implicitly or explicitly configured to use the default spatial relation as the spatial relation of the specific UL transmission in the FR 2, the UE may assume that the spatial relation of the specific UL transmission is identical to the default spatial relation.

In a case where the RS of the QCL type D in a TCI state of specific DL transmission is applicable, the UE may assume that an RS of a spatial relation of specific UL transmission is identical to the RS of the QCL type D in the TCI state of the specific DL transmission. In a case where the RS of the QCL type D in the TCI state of the specific DL transmission is applicable, and the UE is implicitly or explicitly configured to use the default spatial relation as the spatial relation of the specific UL transmission, the UE may assume that the spatial relation of the specific UL transmission is identical to the default spatial relation.

In a case where the RS of the QCL type D in the TCI state of the specific DL transmission is applicable in the FR 2, the UE may assume that the RS of the spatial relation of the specific UL transmission is identical to the RS of the QCL type D in the TCI state of the specific DL transmission. In a case where the RS of the QCL type D in the TCI state of the specific DL transmission is applicable in the FR 2, and the UE is implicitly or explicitly configured to use the default spatial relation as the spatial relation of the specific UL transmission, the UE may assume that the RS of the spatial relation of the specific UL transmission is identical to the RS of the QCL type D in the TCI state of the specific DL transmission.

In a case where the UE is implicitly or explicitly configured to use the default spatial relation as a spatial relation for an SRS resource set (or an SRS resource in the SRS resource set) whose usage is codebook-based transmission (codebook) or noncodebook-based transmission (nonCodebook), the UE may assume that the spatial relation of the specific UL transmission is identical to the default spatial relation. In a case where the UE is implicitly or explicitly configured to use the default spatial relation as a spatial relation for an SRS resource set (or an SRS resource in the SRS resource set) whose usage is codebook-based transmission or noncodebook-based transmission in the FR 2, the UE may assume that the spatial relation of the specific UL transmission is identical to the default spatial relation. In a case where the UE is implicitly or explicitly configured to use the default spatial relation as a spatial relation for an SRS resource set (or an SRS resource in the SRS resource set) whose usage is codebook-based transmission or noncodebook-based transmission in the FR 2, the UE may assume that the spatial relation for the SRS resource is identical to the default spatial relation.

When the UE uses the default spatial relation as the spatial relation of the SRS in a case where usage of an SRS resource set is beam management, the UE uses the same beam (default spatial relation) in all SRS symbols, and therefore it is not possible to sweep the SRS beams. Only in a case where usage of an SRS resource set is codebook-based transmission or noncodebook-based transmission, the UE can sweep a beam in a case where the usage of the SRS resource set is beam management by using the default spatial relation as the spatial relation of the SRS.

In a case where a given function of Rel. 16 and subsequent releases is configured to the UE, the UE may assume that the spatial relation of the specific UL transmission is identical to the default spatial relation (an RS of the spatial relation of the specific UL transmission is identical to an RS of the QCL type D in the TCI state of specific DL transmission). In a case where the given function is configured to the UE, and the UE is implicitly or explicitly configured to use the default spatial relation as the spatial relation of the specific UL transmission, the UE may assume that the spatial relation of the specific UL transmission is identical to the default spatial relation.

The given function may be a beam related function of Rel. 16 and subsequent releases. The given function may be configured to the UE by a higher layer signaling. The beam related function may be at least one of low latency beam selection, Layer 1 (L1)-Signal to Interference plus Noise Ratio (SINR) beam reporting (L1-SINR beam reporting), and BFR on a Secondary Cell (SCell) (BRF on SCell). The low latency beam selection may be referred to as, for example, fast beam selection, beam selection w/o TCI state, beam selection type II and a TCI state indication type 2. The L1-SINR beam reporting may refer to reporting from the UE an L1-SINR measurement result (CSI or an L1-SINR associated with beam) for beam management. The BFR on SCell may refer to at least one of detecting a Beam Failure (BF) in an SCell, transmitting a Beam Failure Recovery reQuest (BFRQ) to the SCell, and receiving a Beam Failure Recovery (BFR) response from the SCell.

The UE may report specific UE capability information. The specific UE capability information may indicate that it is supported to assume that the spatial relation of the specific UL transmission is identical to the default spatial relation (an RS of the spatial relation of the specific UL transmission is identical to an RS of the QCL type D in the TCI state of specific DL transmission), or may indicate that the above-described given function is supported. The specific UE capability information may be a parameter that indicates that the default spatial relation is supported, or may be a parameter that has a name that indicates one of the default spatial relation and the default spatial relation info. In a case where the UE reports the specific UE capability information, the UE may assume that the spatial relation of the specific UL transmission is identical to the default spatial relation. In a case where the UE reports the specific UE capability information, and is implicitly or explicitly configured to use a default spatial relation as the spatial relation of the specific UL transmission, the UE may assume that the spatial relation of the specific UL transmission is identical to the default spatial relation. In a case where the UE does not report the specific UE capability information, the UE may assume that the spatial relation of the specific UL transmission is configured.

The UE that supports the default spatial relation may report the UE capability information that indicates that the UE supports the default spatial relation.

The UE that supports the default spatial relation may report the UE capability information that indicates a channel type that supports the default spatial relation. The channel type may be at least one of a PUCCH, an SRS and a PUSCH.

The UE that supports the default spatial relation may report the UE capability information that indicates a QCL source type that supports the default spatial relation. The QCL source type may be at least one of a CORESET, a PDCCH and a PDSCH.

The UE that does not support the default spatial relation (e.g., the UE that does not report that the UE supports the default spatial relation or the UE that has reported that the UE does not support the default spatial relation) may use the spatial relation of reference UL transmission instead of the default spatial relation. In other words, the UE that does not support the default spatial relation may assume that the spatial relation of the specific UL transmission is identical to the spatial relation of the reference UL transmission.

By reporting specific UE capability information, it is possible to reduce an overhead of notification (at least one of configuration and activation) related to spatial relation information.

<<TCI State, QCL Assumption or RS Used as Default Spatial Relation>>

The default spatial relation may be a TCI state of specific DL transmission, or may be a QCL assumption of specific DL transmission. This TCI state or QCL assumption may be explicitly configured (activated or indicated) to the UE by at least one of an RRC signaling, an MAC CE and DCI, or may be determined by the UE based on measurement of an SSB or a CSI-RS. This TCI state or QCL assumption may be an RS used for reference UL transmission.

The default spatial relation may be read as, for example, an active TCI state (activated TCI state), an active TCI state or a QCL assumption.

A plurality of TCI states may be active for specific DL transmission. In this case, the default spatial relation may be a default TCI state (a default RS, a default TCI state or a QCL assumption).

The default TCI state may be read as an RS that relates to a QCL parameter used to indicate QCL of a PDCCH in a CORESET that includes a lowest CORESET-ID in a latest slot in which one or more CORESETs in an active BWP of the serving cell are monitored by the UE, and that is associated with a monitored search space. The default TCI state may be read as a TCI state or a QCL assumption in the CORESET that includes the lowest CORESET-ID in the latest slot and is associated with the monitored search space. The default TCI state may be read as a TCI state or a QCL assumption in the CORESET that includes the lowest CORESET-ID in a specific slot and is associated with the monitored search space. The default TCI state may be read as a TCI state or a QCL assumption in a specific CORESET. The default TCI state may be read as a TCI state or a QCL assumption (e.g., an RS of the QCL type D in the TCI state or the QCL assumption) of DL transmission associated with specific UL transmission (or a DL channel for triggering the specific UL transmission, a DL channel for scheduling the specific UL transmission or a DL channel for scheduling a DL channel associated with the specific UL transmission). The default TCI state may be read as an RS related to a QCL parameter of specific DL transmission (an RS (e.g., the RS of the QCL type D) that is quasi-co-located with the specific DL transmission).

The specific slot may be a latest slot of PDSCH reception, or may be a latest slot of the specific UL transmission. The specific CORESET may be a CORESET indicated by a higher layer signaling (e.g., spatial relation information of the specific UL transmission).

A CORESET used for a default TCI state may include a CORESET 0, and may not include the CORESET 0.

A default spatial relation may be a spatial relation of reference UL transmission.

The default spatial relation may be an RS associated with a PRACH resource or a PRACH occasion used for latest PRACH transmission (an RS resource index, an SSB index or a CSI-RS resource index).

In a case where specific UL transmission is a PUSCH of a certain cell, specific DL transmission may be a PUCCH resource that includes a lowest ID in an active UL BWP of the certain cell, or may be a PUCCH resource group that includes a lowest ID in the active UL BWP of the certain cell.

In a case where the specific UL transmission is a PUCCH, the specific DL transmission may be a PDCCH associated with the PUCCH (the PDCCH for scheduling a PDSCH associated with HARQ-ACK carried by the PUCCH), or may be a PDSCH associated with the HARQ-ACK carried by the PUCCH. In a case where the specific UL transmission is a PUSCH, the specific DL transmission may be a PDCCH resource for scheduling the PUSCH, may a PDCCH for scheduling a PDSCH associated with HARQ-ACK carried by the PUSCH, or may be a PDSCH associated with the HARQ-ACK carried by the PUSCH. In a case where the specific UL transmission is an A-SRS, the specific DL transmission may be a PDCCH for triggering the A-SRS. In a case where the specific UL transmission is UL transmission such as an SP-SRS triggered by an MAC CE, the specific DL transmission may be a PDCCH for scheduling the MAC CE, or may be a PDSCH that carries the MAC CE.

In a case where the specific UL transmission is a PUCCH (or a PUSCH) that carries HARQ-ACK, the specific DL transmission may be a PDCCH that indicates a resource of the PUCCH (the PDCCH for scheduling a PDSCH associated with the HARQ-ACK), or may be a PDSCH (used to generate the HARQ-ACK) associated with the HARQ-ACK.

The specific DL transmission may be a latest PDSCH.

The specific DL transmission may be configured to the UE by a higher layer signaling, or may be specified in a specification.

The specific DL transmission may be a pathloss measurement DL RS (e.g., pathlossReferenceRS in SRS-ResourceSet in SRS-Config, PUCCH-PathlossReferenceRS in PUCCH-PowerControl in PUCCH-Config, or PUSCH-PathlossReferenceRS in PUSCH-PowerControl in PUSCH-Config). The pathloss measurement DL RS may be a CSI-RS or may be an SSB.

In a case where the pathloss measurement DL RS is configured to the UE by a higher layer signaling, the configured pathloss measurement DL RS may be used as a default spatial relation. In a case where the pathloss measurement DL RS is not configured to the UE by a higher layer signaling, the UE may use an RS resource from an SSB used to obtain an MIB as a pathloss measurement DL RS, or may use the determined pathloss measurement DL RS as a default spatial relation. Furthermore, the UE may determine an ID (an RS resource index $q_d$) of a pathloss measurement DL RS for PUSCH transmission as described with regard to above "Transmit Power Control for the PUSCH", and determine the determined pathloss measurement DL RS as a default spatial relation.

In a case where the default spatial relation is a TCI state or a QCL assumption, there is a case where a DL RS for a spatial relation of specific UL transmission and a pathloss measurement DL RS for power control of specific UL transmission are different. By commonalizing the DL RS for the spatial relation of the specific UL transmission and the pathloss measurement DL RS for power control of the specific UL transmission, it is possible to appropriately control power of the specific UL transmission.

<<Time Offset Between DL and UL>>

In a case where the UE is implicitly or explicitly configured to use a default spatial relation as a spatial relation of specific UL transmission, and in a case where a time offset between reception of DCI (e.g., DCI for scheduling specific DL transmission) and reception of the specific DL transmission is a threshold or more, the UE may assume that the spatial relation (e.g., an RS of a spatial relation) of the specific UL transmission may be identical to a TCI state or a QCL assumption (e.g., an RS of a QCL type D in the TCI state or the QCL assumption) applied to a CORESET used for PDCCH transmission for scheduling the specific DL transmission.

In a case where the UE is implicitly or explicitly configured to use the default spatial relation as the spatial relation of the specific UL transmission, or in a case where a specific parameter is configured to the UE by a specific higher layer parameter, and in a case where the time offset between reception of the DCI (e.g., the DCI for scheduling the specific DL transmission) and reception of the specific DL transmission is less than the threshold, the UE may assume that the spatial relation (e.g., the RS of the spatial relation) of the specific UL transmission may be identical to the default spatial relation.

In a case where TCI presence information (e.g., higher layer parameter TCI-PresentInDCI) is not configured to a CORESET for scheduling a PDSCH or the PDSCH is scheduled by a DCI format 1_0, and in a case where a time offset between reception of DL DCI (e.g., DCI for scheduling the PDSCH) and reception of a PDSCH associated with the DCI is a threshold or more, the UE may assume that the spatial relation (e.g., an RS of a spatial relation) of a PUCCH (or a PUSCH) that carries HARQ-ACK for the PDSCH may be identical to a TCI state or a QCL assumption (e.g., an RS of the QCL type D in the TCI state or the QCL assumption) applied to the CORESET used for PDCCH transmission for scheduling the PDSCH.

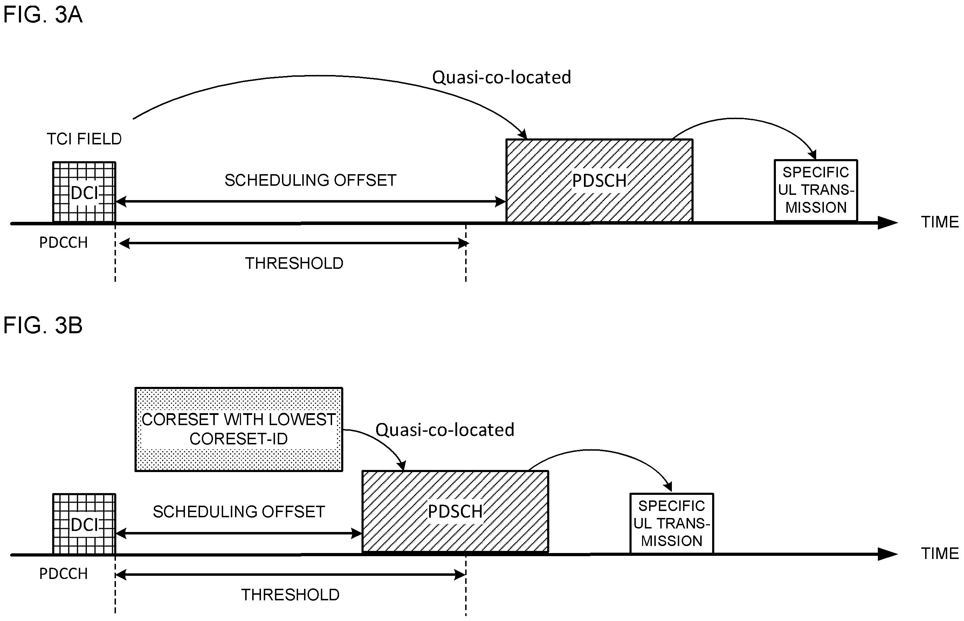

In a case where the TCI presence information is set as "enabled", and in a case where a TCI field in DCI in a Component Carrier (CC) for scheduling (PDSCH) indicates an activated TCI state in the CC to be scheduled or a DL BWP, and the PDSCH is scheduled by a DCI format 1_1, the UE may use a TCI that conforms to a value of a TCI field in a detected PDCCH including DCI to determine a spatial relation of a PUCCH (or PUSCH) that carries HARQ-ACK for the PDSCH. In a case where a time offset between reception of DL DCI (for scheduling the PDSCH) and reception of a PDSCH associated with the DCI is a threshold or more, the UE may assume that a spatial relation (e.g., an RS of a spatial relation) of a PUCCH (or PUSCH) that carries HARQ-ACK for the PDSCH is quasi-co-located with an RS (e.g., the RS of the QCL type D) in a TCI state related to a QCL type parameter given by an indicated TCI state e.g. Fig. 3A).

In both of a case where the TCI presence information is set as "enabled" in an RRC connected mode, and a case where the intra-DCI TCI information is not configured, and in a case where a time offset between reception of DL DCI (DCI for scheduling a PDSCH) and reception of a corresponding PDSCH (the PDSCH scheduled by the DCI) is less than a threshold, the UE may assume that a spatial relation (an RS of a spatial relation) of a PUCCH (or PUSCH) that carries HARQ-ACK for a PDSCH is quasi-co-located with an RS that relates to a QCL parameter used to indicate QCL of a PDCCH in a CORESET that includes a lowest CORESET-ID in a specific slot (latest slot) in which one or more CORESETs in an active BWP of a serving cell are monitored by the UE, and that is associated with a monitored search space (e.g., Fig. 3B), or may assume that the spatial relation of the PUCCH (or PUSCH) that carries the HARQ-ACK for the PDSCH is quasi-co-located with an RS that relates to the QCL parameter of the PDSCH (an RS (the RS of the QCL type D) quasi-co-located with the PDSCH (a DM-RS port of the PDSCH or an antenna port of the PDSCH)).

The specific slot may be a latest slot in a PDSCH associated with specific UL transmission (e.g., the PDSCH associated with HARQ-ACK carried by the specific UL transmission). In this case, by using the RS related to the QCL parameter associated with a CORESET of the latest slot for the PDSCH as a spatial relation of the specific UL transmission, the UE can make a beam of the PDSCH (spatial domain reception filter) and a beam of the specific UL transmission (spatial domain transmission filter) identical, avoid processing of changing the beam, and suppress a processing load.

The specific slot may be a latest slot of specific UL transmission. In this case, by using the RS related to the QCL parameter associated with a CORESET of the latest slot for the specific UL transmission as a spatial relation of the specific UL transmission, the UE can make a beam of a latest PDCCH (spatial domain reception filter) and a beam of the specific UL transmission (spatial domain transmission filter) identical, avoid processing of changing the beam, and suppress a processing load.

<<Specific Example of Implicit or Explicit Configuration>>

The case where the UE is implicitly or explicitly configured to use the default spatial relation as the spatial relation of the specific UL transmission may be paraphrased as at least one of following cases 1 to 5.

<<Case 1>>

In a case where there is not a specific field in a specific higher layer parameter (e.g., RRC information element) (information of the specific field is not configured in the specific higher layer parameter), the UE may assume that the spatial relation of the specific UL transmission is identical to the default spatial relation (an RS of the spatial relation of the specific UL transmission is identical to an RS of the QCL type D in the TCI state of specific DL transmission).

The specific higher layer parameter may be, for example, SRS configuration information (SRS-Config) or PUCCH configuration information (PUCCH-Config).

In a case where there is not a specific field in SRS resource information (SRS-Resource) in the SRS configuration information (SRS-Config), the UE may assume that the spatial relation of the specific UL transmission is identical to the default spatial relation. The specific field may be spatial relation information (spatialRelationInfo) that is a configuration of a spatial relation between a reference RS (e.g., an SSB, a CSI-RS or an SRS) and a target SRS.

In a case where an SRS resource in an SRS resource set whose usage is codebook-based transmission or noncodebook-based transmission does not include the spatial relation information in an FR 2, the UE may assume that the spatial relation for the SRS resource is identical to the default spatial relation.

In a case where SRS resource set information (SRS-ResourceSet) in the SRS configuration information (SRS-Config) indicates that the SRS resource is used for codebook-based transmission or noncodebook-based transmission (the usage in the SRS resource set information indicates a codebook or a noncodebook), and there is not the specific field in the SRS resource information (SRS-Resource) that indicates SRS resources in the SRS resource set, the UE may assume that an RS of a spatial relation of a PUSCH is identical to an RS of the QCL type D in an active TCI state of specific DL transmission. The specific field may be the spatial relation information (spatialRelationInfo).

In a case where the usage in the SRS resource set information indicates a codebook or a noncodebook, and there is not the specific field in the SRS resource information (SRS-Resource) that indicates SRS resources in the SRS resource set, the UE may assume that an RS of a spatial relation of a PUSCH is identical to an RS of the QCL type D in an active TCI state of specific DL transmission. The specific field may be the spatial relation information (spatialRelationInfo).

In a case where there is not the specific field in PUCCH configuration information (PUCCH-Config), the UE may assume that an RS of a spatial relation of a PUCCH is identical to an RS of the QCL type D in an active TCI state of specific DL transmission. The specific field may be an element of a list (spatialRelationInfoToAddModList). The element may be PUCCH spatial relation information (PUCCH-SpatialRelationInfo) used to configure a spatial setting for PUCCH transmission.

<<Case 2>>

A specific higher layer parameter (e.g., RRC information element) may indicate a specific parameter. In a case where the specific parameter is configured to the UE by the specific higher layer parameter (in a case where information related to a TCI state or a QCL assumption is configured) (in a case where the specific higher layer parameter indicates the specific parameter, or in a case where the specific higher layer parameter includes a field of the specific parameter), the UE may assume that the spatial relation of the specific UL transmission is identical to the default spatial relation (an RS of the spatial relation of the specific UL transmission is identical to an RS of the QCL type D in the TCI state of specific DL transmission).

The specific higher layer parameter may be, for example, the SRS configuration information (SRS-Config), the PUCCH configuration information (PUCCH-Config), the spatial relation information (e.g., spatialRelationInfo or PUCCH-SpatialRelationInfo), reference signal information (referenceSignal) in the spatial relation information or a type in the spatial relation information. Furthermore, the specific parameter may be one of options of the reference signal information or the type.

The specific parameter may be a parameter (e.g., TCI state) that indicates to use a TCI state of specific DL transmission as a spatial relation of specific UL transmission, may be a parameter (e.g., default) that indicates that an RS of the spatial relation of the specific UL transmission is the default spatial relation, may be a parameter (e.g., CORESET) that indicates that the spatial relation of the specific UL transmission is identical to a TCI state of a CORESET, or may be a parameter (e.g., ControlRS) that indicates that the RS of the spatial relation of the specific UL transmission is identical to an RS of the QCL type D in the TCI state of the specific DL transmission.

In a case where, for example, a CORESET is configured to the UE by the spatial relation information, (in a case where the spatial relation information indicates the CORESET, or a case where the spatial relation information includes a field of the CORESET), the UE may assume that an RS of a spatial relation of specific UL transmission is identical to an RS of the QCL type D in a TCI state of specific DL transmission.

In a case where the specific parameter is configured by the SRS resource information (SRS-Resource) in the SRS configuration information (SRS-Config), the UE may assume that an RS of a spatial relation of specific UL transmission is identical to an RS of the QCL type D in an active TCI state of specific DL transmission.

In a case where an SRS resource set (or an SRS resource in the SRS resource set) whose usage is codebook-based transmission or noncodebook-based transmission includes the specific parameter in the FR 2, the UE may assume that a spatial relation for the SRS resource set (or the SRS resource in the SRS resource set) is identical to the default spatial relation.

In a case where the SRS resource set information (SRS-ResourceSet) in the SRS configuration information (SRS-Config) indicates that the SRS resource set is used for codebook-based transmission or noncodebook-based transmission (the usage in the SRS resource set information indicates a codebook or a noncodebook), and in a case where the specific parameter is configured by the SRS resource information (SRS-Resource) (or spatial relation information (spatialRelationInfo)) that indicates SRS resources in the SRS resource set, the UE may assume that an RS of a spatial relation of a PUSCH is identical to an RS of the QCL type D in an active TCI state of specific DL transmission.

In a case where the specific parameter is configured by the PUCCH configuration information (PUCCH-Config), the UE may assume that an RS of a spatial relation of a PUCCH is identical to an RS of the QCL type D in an active TCI state of specific DL transmission. The specific parameter may be an element of a list (spatialRelationInfoToAddModList). The element may be PUCCH spatial relation information (PUCCH-SpatialRelationInfo) used to configure a spatial setting the for PUCCH transmission.

In a case where a CORESET is configured by the PUCCH configuration information (PUCCH-Config), the UE may assume that an RS of a spatial relation of a PUCCH is identical to an RS of the QCL type D in a TCI state of a CORESET.

<<Case 3>>

In a case where a specific RS is not configured in the specific higher layer parameter (the specific higher layer parameter does not include the specific RS), the UE may assume that a spatial relation of specific UL transmission is identical to the default spatial relation (an RS of the spatial relation of the specific UL transmission is identical to an RS of the QCL type D in a TCI state of specific DL transmission).

The specific higher layer parameter is the SRS configuration information (SRS-Config), the spatial relation information (spatialRelationInfo), the PUCCH configuration information (PUCCH-Config) or the PUCCH spatial relation information (PUCCH-SpatialRelationInfo).

The specific RS may be one of an SRS, an SSB and a CSI-RS. A case where the specific RS is not configured in the specific higher layer parameter may be a case where none of the SRS, the SSB and the CSI-RS is configured in the specific higher layer parameter.

In a case where the specific RS is not configured in the SRS resource information (SRS-Resource) in the SRS configuration information (SRS-Config), the UE may assume that an RS of a spatial relation of specific UL transmission is identical to an RS of the QCL type D in an active TCI state of specific DL transmission. The specific RS may be a Reference Signal (RS) in the spatial relation information (spatialRelationInfo).

In a case where an SRS resource set (or an SRS resource in the SRS resource set) whose usage is codebook-based transmission or noncodebook-based transmission does not include the specific RS in the FR 2, the UE may assume that a spatial relation for the SRS resource set (or the SRS resource in the SRS resource set) is identical to the default spatial relation.

In a case where the SRS resource set information (SRS-ResourceSet) in the SRS configuration information (SRS-Config) indicates that the SRS resource set is used for codebook-based transmission or noncodebook-based transmission (the usage in the SRS resource set information indicates a codebook or a noncodebook), and in a case where the specific RS is not configured in the SRS resource information (SRS-Resource) that indicates SRS resources in the SRS resource set, the UE may assume that an RS of a spatial relation of a PUSCH is identical to an RS of the QCL type D in an active TCI state of specific DL transmission. The specific RS may be a Reference Signal (RS) in the spatial relation information (spatialRelationInfo).

In a case where the specific RS is not configured in the PUCCH configuration information (PUCCH-Config), the UE may assume that an RS of a spatial relation of a PUCCH is identical to an RS of the QCL type D in an active TCI state of specific DL transmission. The specific RS may be a Reference Signal (RS) in the PUCCH spatial relation information (PUCCH-SpatialRelationInfo).

In a case where the PUCCH spatial relation information does not include the specific RS, and includes information (e.g., pucch-PathlossReferenceRS-Id, p0-PUCCH-Id or closedLoopIndex) for power control of a PUCCH, the UE can control power of the PUCCH based on the PUCCH spatial relation information.

<<Case 4>>

In a case where the specific higher layer parameter is not configured, the UE may assume that a spatial relation of specific UL transmission is identical to the default spatial relation (an RS of the spatial relation of the specific UL transmission is identical to an RS of the QCL type D in a TCI state of specific DL transmission).

The specific higher layer parameter may be a specific RRC information element, or may be a higher layer parameter (e.g., spatialRelationInfo or PUCCH-SpatialRelationInfo) of the spatial relation information.

The SRS parameter (a higher layer parameter (spatialRelationInfo) of the spatial relation information that is a configuration of a spatial relation between a reference RS and a target SRS) may be able to be semi-statically configured by a higher layer parameter (SRS-Resource) of the SRS resource.

In a case where the higher layer parameter spatialRelationInfo is configured, the higher layer parameter spatialRelationInfo may include an ID of the reference RS. The reference RS may be an SS/PBCH block, a CSI-RS or an SRS. The CSI-RS may be configured on a serving cell indicated by a higher layer parameter (servingCellId) of a serving cell ID in a case where there is the higher layer parameter (servingCellId). The SRS may be configured on a UL BWP indicated by a higher layer parameter (uplinkBWP) of the UL BWP, may be configured on the serving cell indicated by the higher layer parameter (servingCellId) of the serving cell ID in the case where there is the higher layer parameter (servingCellId), or may be configured on the same serving cell as that of the target SRS in a case where there is not the higher layer parameter (servingCellId).

In the case where the higher layer parameter spatialRelationInfo is not configured, the UE may assume that an RS of a spatial relation is identical to an RS of the QCL type D in an active TCI state of specific DL transmission.

In the case where the higher layer parameter spatialRelationInfo is not configured, the UE may assume that an RS of a spatial relation is identical to an RS of the QCL type D in an active TCI state of specific DL transmission, or an RS of the QCL type D in a TCI state or a QCL assumption in a CORESET that includes the lowest CORESET-ID in the latest slot and is associated with the monitored search space.

<<Case 5>>

In a case where the specific higher layer parameter for the specific type is not configured, the UE may assume that a spatial relation of specific UL transmission is identical to the default spatial relation (an RS of the spatial relation of the specific UL transmission is identical to an RS of the QCL type D in a TCI state of specific DL transmission). The specific type may be at least one of a P-SRS, an SP-SRS and an A-SRS, or may be specified by a higher layer parameter (resourceType) of a resource type in the SRS resource information.

<<<P-SRS>>>

A case where the SRS resource information (SRS-Resource) indicates a P-SRS to the UE to which 1 or more SRS resource configurations are configured (a case where the higher layer parameter (resourceType) of the resource type in the SRS resource information indicates "periodic") will be described.

In a case where the higher layer parameter spatialRelationInfo including an ID (ssb-Index) of a reference SS/PBCH block is configured to the UE, the UE may transmit a target SRS resource including the same spatial domain transmission filter as that used for reception of the reference SS/PBCH block. In a case where the higher layer parameter spatialRelationInfo including an ID (csi-RS-Index) of a reference CSI-RS is configured to the UE, the UE may transmit the target SRS resource including the same spatial domain transmission filter as that used for reception of a reference periodic CSI-RS or a reference semi-persistent CSI-RS. In a case where the higher layer parameter spatialRelationInfo including an ID (srs) of a reference SRS is configured to the UE, the UE may transmit the target SRS resource including the same spatial domain transmission filter as that used for transmission of a reference P-SRS.

In a case where the higher layer parameter spatialRelationInfo is not configured, the UE may assume that an RS of a spatial relation of specific UL transmission is identical to an RS of the QCL type D in an active TCI state of specific DL transmission.

In the case where the higher layer parameter spatialRelationInfo is not configured, the UE may assume that the RS of the spatial relation of the specific UL transmission is identical to an RS of the QCL type D in a TCI state or a QCL assumption in a CORESET that includes the lowest CORESET-ID in the latest slot and is associated with the monitored search space.

<<<SP-SRS>>>

A case where the SRS resource information (SRS-Resource) indicates an SP-SRS to the UE to which 1 or more SRS resource configurations are configured (a case where the higher layer parameter (resourceType) of the resource type in the SRS resource information indicates "semi-persistent") will be described.

In a case where the UE receives an activation command for an SRS resource, and in a case where HARQ-ACK associated with a PDSCH that carries a selection command is transmitted in a slot n, a corresponding operation and a UE's assumption on SRS transmission associated with the configured SRS resource set may be applied from a slot n+3N+1 (N represents the number of slots in a subframe). An activation command may include a spatial relation assumption provided by a list of references to one reference signal ID per element of an activated SRS resource set. Each ID in the list may refer to a reference SS/PBCH block, NZP CSI-RS resource or SRS resource. The reference NZP CSI-RS resource may be an NZP CSI-RS resource that is configured on a serving cell indicated by a resource serving cell ID field in a case where there is the resource serving cell ID field in the activation command, or may be an NZP CSI-RS resource that is configured on the same serving cell as that of an SRS resource set in a case where there is not the resource serving cell ID field in the activation command. The reference SRS resource may be an SRS resource configured on a serving cell and a UL BWP indicated by a resource serving cell ID and a resource BWP ID in a case where there are the resource serving cell ID and the resource BWP ID in the activation command, or may be an SRS resource configured on the same serving cell and BWP as those of the SRS resource set in a case where there are not the resource serving cell ID and the resource BWP ID in the activation command.

In a case where the higher layer parameter spatialRelationInfo including the ID (ssb-Index) of the reference SS/PBCH block is configured to the UE, the UE may transmit the target SRS resource including the same spatial domain transmission filter as that used for reception of the reference SS/PBCH block. In a case where the higher layer parameter spatialRelationInfo including the ID (csi-RS-Index) of the reference CSI-RS is configured to the UE, the UE may transmit the target SRS resource including the same spatial domain transmission filter as that used for reception of the reference periodic CSI-RS or the reference semi-persistent CSI-RS. In a case where the higher layer parameter spatialRelationInfo including the ID (srs) of the reference SRS is configured to the UE, the UE may transmit the target SRS resource including the same spatial domain transmission filter as that used for transmission of the reference P-SRS or the reference SP-SRS.

In a case where even the one higher layer parameter spatialRelationInfo is not configured, or in a case where even the one higher layer parameter spatialRelationInfo is not activated, the UE may assume that an RS of a spatial relation of specific UL transmission is identical to an RS of the QCL type D in an active TCI state of specific DL transmission.

In a case where even the one higher layer parameter spatialRelationInfo is not configured, or in a case where even the one higher layer parameter spatialRelationInfo is not activated, the UE may assume that the RS of the spatial relation of the specific UL transmission is identical to an RS of the QCL type D in a TCI state or a QCL assumption in a CORESET that includes the lowest CORESET-ID in the latest slot and is associated with the monitored search space.

<<<A-SRS>>>

A case where the SRS resource information (SRS-Resource) indicates an A-SRS to the UE to which 1 or more SRS resource configurations are configured (a case where the higher layer parameter (resourceType) of the resource type in the SRS resource information indicates "aperiodic") will be described.

In a case where the higher layer parameter spatialRelationInfo including the ID (ssb-Index) of the reference SS/PBCH block is configured to the UE, the UE may transmit the target SRS resource including the same spatial domain transmission filter as that used for reception of the reference SS/PBCH block. In a case where the higher layer parameter spatialRelationInfo including the ID (csi-RS-Index) of the reference CSI-RS is configured to the UE, the UE may transmit the target SRS resource including the same spatial domain transmission filter as that used for reception of a reference periodic CSI-RS, a reference semi-persistent SP-CSI-RS or a latest reference aperiodic CSI-RS. In a case where the higher layer parameter spatialRelationInfo including the ID (srs) of the reference SRS is configured to the UE, the UE may transmit the target SRS resource including the same spatial domain transmission filter as that used for transmission of a reference P-SRS, a reference SP-SRS or a reference A-SRS.

In a case where the higher layer parameter spatialRelationInfo is not configured, the UE may assume that an RS of a spatial relation of specific UL transmission is identical to an RS of the QCL type D in an active TCI state of specific DL transmission.

In the case where the higher layer parameter spatialRelationInfo is not configured, the UE may assume that the RS of the spatial relation of the specific UL transmission is identical to an RS of the QCL type D in a TCI state or a QCL assumption in a CORESET that includes the lowest CORESET-ID in the latest slot and is associated with the monitored search space.

In the case where the higher layer parameter spatialRelationInfo is not configured, the UE may assume that the RS of the spatial relation of the specific UL transmission is identical to an RS of the QCL type D in a TCI state or a QCL assumption of a PDCCH for triggering the A-SPS.

<<Effect>>

According to above embodiment 1, in a case where an active TCI state of specific DL transmission is updated by an MAC CE or DCI, it is possible to update a spatial relation of specific UL transmission. It is not necessary to perform RRC reconfiguration, and it is possible to quickly control the spatial relation of the specific UL transmission, so that it is possible to enhance communication characteristics of the specific UL transmission. Furthermore, a base station does not need to configure and activate spatial relation information, and consequently can avoid a signaling overhead for the spatial relation and an interruption of communication.

It is studied that a total maximum number of active spatial relations that are a DL-RS that is unique (to an aperiodic NZP CSI-RS), an SRS to which a spatial relation is not configured, and a TCI state that is available for triggering DCI of the aperiodic NZP CSI-RS for indicating a spatial domain transmission filter for a PUCCH and an SRS for a PUSCH per CC and per BWP is at least 1 in the UE capability information. Furthermore, it is studied to support one additional active spatial relation for the PUCCH in a case where this maximum number of active spatial relations is 1. According to embodiment 1, it is possible to keep the total number of active spatial relations as 1, and the UE can operate according to this UE capability information.

<Embodiment 2>

A UE may determine a power control parameter of specific UL transmission based on an implicit or explicit configuration that uses a default spatial relation according to embodiment 1 for the specific UL transmission.

In a case where spatial relation information including the power control parameter is configured for the specific UL transmission, the power control parameter included in the spatial relation information may be used for the specific UL transmission. The power control parameter may include at least one of a P0 value (e.g., p0 or p0-PUCCH-Id), an $\alpha$ value (e.g., Alpha), a pathloss measurement DL RS (e.g., pathlossReferenceRS or PUCCH-PathlossReferenceRS-Id), an SRS power control adjustment state (e.g., srs-PowerControlAdjustmentStates) or a closed loop index (e.g., closedLoopIndex).

<<Embodiment 2-1>>

In a case where the UE is implicitly or explicitly configured to use the default spatial relation for specific UL transmission, the UE may use a given power control parameter for the specific UL transmission. The given power control parameter may be a given value specified in a specification, or may be configured to the UE by a higher layer signaling.

<<Embodiment 2-2>>

In a case where the UE is implicitly or explicitly configured to use the default spatial relation for specific UL transmission, the UE may use a power control parameter configured by an MAC CE for the specific UL transmission.

The MAC CE that updates (indicates or activates) a TCI state or a QCL assumption of specific DL transmission may include the power control parameter. The MAC CE that activates one TCI state in a TCI state list configured by a higher layer signaling may include the power control parameter.

A case where the UE is implicitly or explicitly configured to use the default spatial relation for specific UL transmission may be a case (e.g., case 3 in embodiment 1) where a Reference Signal (RS) is not configured to the UE by the spatial relation information.

One of a plurality of pieces of spatial relation information configured by an RRC signaling may be indicated (activated) to the UE by an MAC CE. In a case where the RS is not configured to the UE by the spatial relation information, and the power control parameter is configured to the UE by the spatial relation information, the power control parameter may be updated by the spatial relation information indicated by the MAC CE.

<<Effect>>

There is a case where at least one of a distance between a channel from the UE to a transmission destination TRP #1 of a UL beam #1 and a channel from the UE to a transmission destination TRP of a UL beam #2, and Line Of Sight (LOS) or Non-Line Of Sight (NLOS) is different. According to above embodiment 2, by updating a spatial relation (UL beam) of specific UL transmission and updating a power control parameter, it is possible to appropriately control power of the UL transmission even when spatial relation information is not configured.

<Embodiment 3>

A UE may determine a pathloss measurement DL RS based on an MAC CE.

In a case where the UE is implicitly or explicitly configured to use a default spatial relation according to embodiment 1 for specific UL transmission, the UE may determine the pathloss measurement DL RS based on the MAC CE. In a case where spatial relation information of the specific UL transmission is configured to the UE by a higher layer signaling, the UE may determine the pathloss measurement DL RS based on the MAC CE.

In a case where the pathloss measurement DL RS (e.g., PUSCH-PathlossReferenceRS) is not explicitly configured by an RRC layer signaling (a case where the information of the pathloss measurement DL RS is not provided to the UE, or before a dedicated higher layer parameter is provided to the UE), the UE may determine the pathloss measurement DL RS based on the MAC CE.

A list including a plurality of pathloss measurement DL RSs (e.g., PUSCH-PathlossReferenceRS) may be configured to the UE by the RRC signaling, and the pathloss measurement DL RS in the list may be indicated (activated) to the UE by an MAC CE. For example, the list including 64 pathloss measurement DL RSs may be configured to the UE, and activation of indices of some pathloss measurement DL RSs in the list may be indicated to the UE by the MAC CE.

Information that indicates an association between a plurality of pathloss measurement DL RSs and a plurality of TCI states may be provided to the UE by a higher layer signaling, or may be specified in a specification. In a case where a TCI state is updated, the UE may update a pathloss measurement DL RS by determining the pathloss measurement DL RS associated with the TCI state.

<<Embodiment 3-1>>

In a case where spatial relation information of specific UL transmission is updated by an MAC CE, the UE may update a pathloss measurement DL RS.

In the case where the spatial relation information of the specific UL transmission is updated by the MAC CE, the UE may use an RS of the spatial relation information of the specific UL transmission as the pathloss measurement DL RS. In a case where, for example, the spatial relation information is updated from an SSB #m to an SSB #n by the MAC CE, the UE may update the pathloss measurement DL RS to the SSB #n.

In a case where at least one of RSs of a QCL type D and a QCL type A in a TCI state of specific DL transmission is updated by the MAC CE, the UE may use the RS as the pathloss measurement DL RS.

<<Embodiment 3-2>>

In a case where the UE is implicitly or explicitly configured to use the default spatial relation for specific UL transmission, the UE may use an RS of the default spatial relation as a pathloss measurement DL RS.

In a case where, for example, the UE is implicitly or explicitly configured to use the default spatial relation for the specific UL transmission, and a QCL assumption of a PDCCH or a PDSCH used for the default spatial relation is updated to a TRS #n by an MAC CE, the UE may update the pathloss measurement DL RS to the TRS #n.

<<Effect>>

In a case where the default spatial relation is a TCI state or a QCL assumption, there is a case where a DL RS for a spatial relation of specific UL transmission and a pathloss measurement DL RS for power control of the specific UL transmission are different. According to above embodiment 3, the pathloss measurement DL RS for power control of the specific UL transmission is updated by an MAC CE, so that it is possible to appropriately control power of the specific UL transmission.

(Radio Communication System)

The configuration of the radio communication system according to one embodiment of the present disclosure will be described below. This radio communication system uses one or a combination of the radio communication method according to each of the above embodiments of the present disclosure to perform communication.

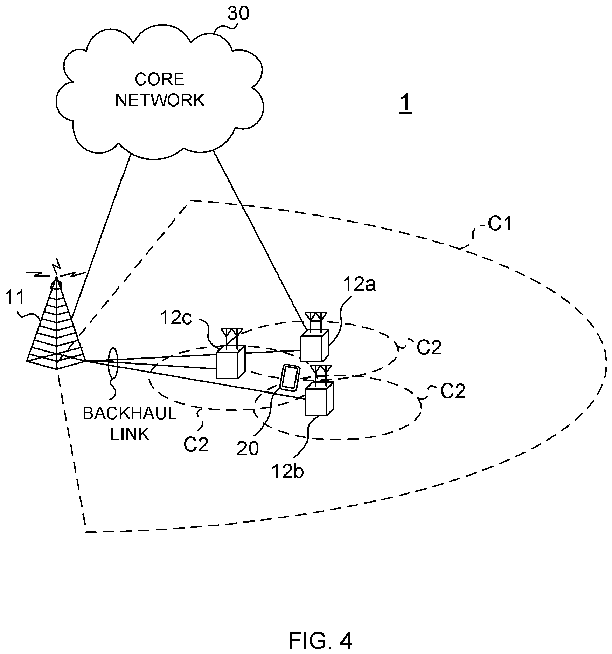

Fig. 4 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).
Furthermore, the radio communication system 1 may support dual connectivity (Multi-RAT Dual Connectivity (MR-DC)) between a plurality of Radio Access Technologies (RATs). MR-DC may include dual connectivity (E-UTRA-NR Dual Connectivity (EN-DC)) of LTE (Evolved Universal Terrestrial Radio Access (E-UTRA)) and NR, and dual connectivity (NR-E-UTRA Dual Connectivity (NE-DC)) of NR and LTE.
According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.
The radio communication system 1 may support dual connectivity between a plurality of base stations in an identical RAT (e.g., dual connectivity (NR-NR Dual Connectivity (NN-DC)) where both of the MN and the SN are base stations (gNBs) according to NR).
The radio communication system 1 may include a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 4. The base stations 11 and 12 will be collectively referred to as a base station 10 below when not distinguished.
The user terminal 20 may connect with at least one of a plurality of base stations 10. The user terminal 20 may use at least one of Carrier Aggregation (CA) and Dual Connectivity (DC) that use a plurality of Component Carriers (CCs).
Each CC may be included in at least one of a first frequency range (Frequency Range 1 (FR 1)) and a second frequency range (Frequency Range 2 (FR 2)). The macro cell C1 may be included in the FR 1, and the small cell C2 may be included in the FR 2. For example, the FR 1 may be a frequency range equal to or less than 6 GHz (sub-6 GHz), and the FR 2 may be a frequency range higher than 24 GHz (above-24 GHz). In addition, the frequency ranges and definitions of the FR 1 and the FR 2 are not limited to these, and, for example, the FR 1 may correspond to a frequency range higher than the FR 2.
Furthermore, the user terminal 20 may perform communication by using at least one of Time Division Duplex (TDD) and Frequency Division Duplex (FDD) in each CC.
A plurality of base stations 10 may be connected by way of wired connection (e.g., optical fibers compliant with a Common Public Radio Interface (CPRI) or an X2 interface) or radio connection (e.g., NR communication). When, for example, NR communication is used as a backhaul between the base stations 11 and 12, the base station 11 corresponding to a higher station may be referred to as an Integrated Access Backhaul (IAB) donor, and the base station 12 corresponding to a relay station (relay) may be referred to as an IAB node.
The base station 10 may be connected with a core network 30 via the another base station 10 or directly. The core network 30 may include at least one of, for example, an Evolved Packet Core (EPC), a 5G Core Network (5GCN) and a Next Generation Core (NGC).
The user terminal 20 is a terminal that supports at least one of communication schemes such as LTE, LTE-A and 5G.
The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (Physical Downlink Shared Channel (PDSCH)) shared by each user terminal 20, a broadcast channel (Physical Broadcast Channel (PBCH)) and a downlink control channel (Physical Downlink Control Channel (PDCCH)) as downlink channels.

Furthermore, the radio communication system 1 may use an uplink shared channel (Physical Uplink Shared Channel (PUSCH)) shared by each user terminal 20, an uplink control channel (Physical Uplink Control Channel (PUCCH)) and a random access channel (Physical Random Access Channel (PRACH)) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One search space may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Uplink Control Information (UCI) including at least one of Channel State Information (CSI), transmission acknowledgement information (that may be referred to as, for example, Hybrid Automatic Repeat reQuest ACKnowledgement (HARQ-ACK) or ACK/NACK) and a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 may convey a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

(Base Station)

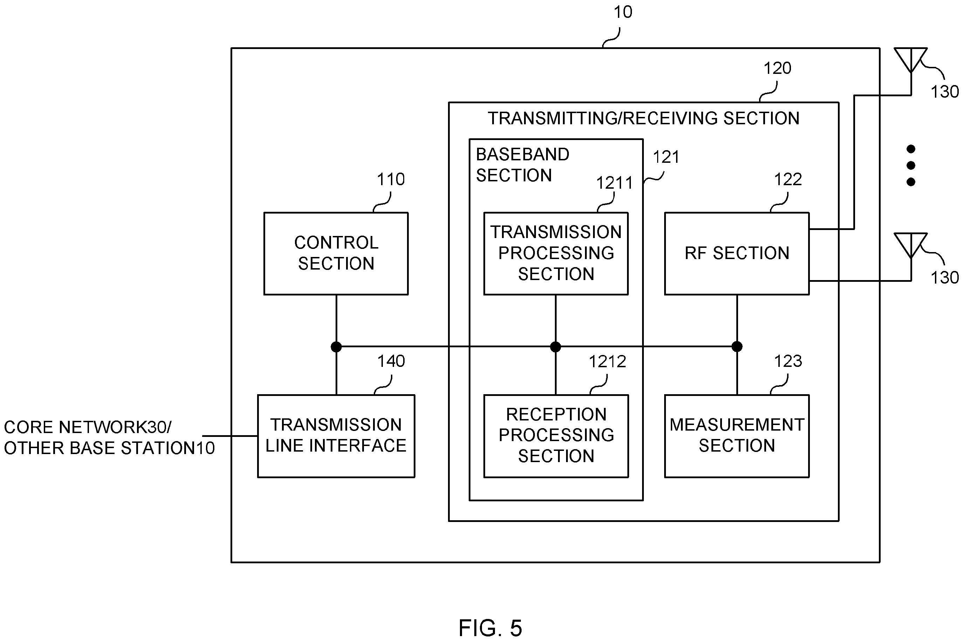

Fig. 5 is a diagram illustrating one example of a configuration of the base station according to the one embodiment. The base station 10 includes a control section 110, a transmission/reception section 120, transmission/reception antennas 130 and a transmission line interface 140. In addition, the base station 10 may include one or more of each of the control sections 110, the transmission/reception sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmission/reception section 120, the transmission/reception antennas 130 and the transmission line interface 140. The control section 110 may generate data, control information or a sequence to be transmitted as a signal, and forward the signal to the transmission/reception section 120. The control section 110 may perform call processing (such as configuration and release) of a communication channel, state management of the base station 10 and radio resource management.

The transmission/reception section 120 may include a baseband section 121, a Radio Frequency (RF) section 122 and a measurement section 123. The baseband section 121 may include a transmission processing section 1211 and a reception processing section 1212. The transmission/reception section 120 can be composed of a transmitter/receiver, an RF circuit, a baseband circuit, a filter, a phase shifter, a measurement circuit and a transmission/reception circuit described based on the common knowledge in the technical field according to the present disclosure.

The transmission/reception section 120 may be composed as an integrated transmission/reception section, or may be composed of a transmission section and a reception section. The transmission section may be composed of the transmission processing section 1211 and the RF section 122. The reception section may be composed of the reception processing section 1212, the RF section 122 and the measurement section 123.

The transmission/reception antenna 130 can be composed of an antenna such as an array antenna described based on the common knowledge in the technical field according to the present disclosure.

The transmission/reception section 120 may transmit the above-described downlink channel, synchronization signal and downlink reference signal. The transmission/reception section 120 may receive the above-described uplink channel and uplink reference signal.

The transmission/reception section 120 may form at least one of a transmission beam and a reception beam by using digital beam forming (e.g., precoding) or analog beam forming (e.g., phase rotation).

The transmission/reception section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmission/reception section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmission/reception section 120 (RF section 122) may modulate the baseband signal into a radio frequency range, perform filter processing and amplification on the signal, and transmit the signal of the radio frequency range via the transmission/reception antennas 130.

On the other hand, the transmission/reception section 120 (RF section 122) may perform amplification and filter processing on the signal of the radio frequency range received by the transmission/reception antennas 130, and demodulate the signal into a baseband signal.

The transmission/reception section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmission/reception section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmission section and the reception section of the base station 10 according to the present disclosure may be composed of at least one of the transmission/reception section 120, the transmission/reception antenna 130 and the transmission line interface 140.

In addition, the transmission/reception section 120 may transmit a reference signal (e.g., an SSB or a CSI-RS). The transmission/reception section 120 may transmit information (an MAC CE or DCI) that indicates a TCI state for specific DL transmission. The TCI state may indicate at least one of the reference signal (e.g., the SSB or the CSI-RS), a QCL type and a cell that transmits the reference signal. The TCI state may indicate 1 or more reference signals. The 1 or more reference signals may include a reference signal of a QCL type A, or may include a reference signal of a QCL type D.

The control section 110 may assume that a first reference signal of a spatial relation of specific uplink transmission (e.g., an SRS, a PUCCH or a PUSCH) is a second reference signal (e.g., the SSB or the CSI-RS) of the QCL type D in a Transmission Configuration Indication (TCI) state or a Quasi-Co-Location (QCL) assumption of a specific downlink channel (e.g., a PDCCH or a PDSCH).

(User Terminal)

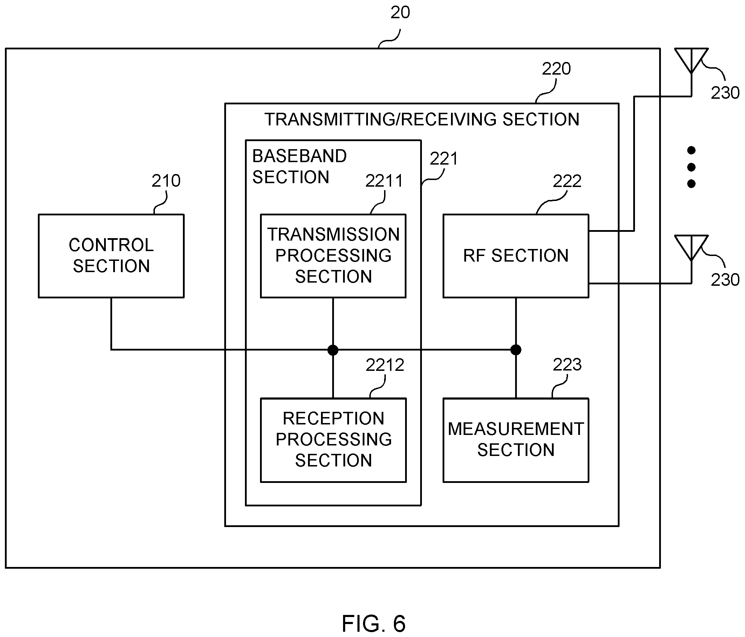

Fig. 6 is a diagram illustrating one example of a configuration of the user terminal according to the one embodiment. The user terminal 20 includes a control section 210, a transmission/reception section 220 and transmission/reception antennas 230. In this regard, the user terminal 20 may include one or more of each of the control sections 210, the transmission/reception sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmission/reception section 220 and the transmission/reception antennas 230. The control section 210 may generate data, control information or a sequence to be transmitted as a signal, and forward the signal to the transmission/reception section 220.

The transmission/reception section 220 may include a baseband section 221, an RF section 222 and a measurement section 223. The baseband section 221 may include a transmission processing section 2211 and a reception processing section 2212. The transmission/reception section 220 can be composed of a transmitter/receiver, an RF circuit, a baseband circuit, a filter, a phase shifter, a measurement circuit and a transmission/reception circuit described based on the common knowledge in the technical field according to the present disclosure.

The transmission/reception section 220 may be composed as an integrated transmission/reception section, or may be composed of a transmission section and a reception section. The transmission section may be composed of the transmission processing section 2211 and the RF section 222. The reception section may be composed of the reception processing section 2212, the RF section 222 and the measurement section 223.

The transmission/reception antenna 230 can be composed of an antenna such as an array antenna described based on the common knowledge in the technical field according to the present disclosure.

The transmission/reception section 220 may receive the above-described downlink channel, synchronization signal and downlink reference signal. The transmission/reception section 220 may transmit the above-described uplink channel and uplink reference signal.

The transmission/reception section 220 may form at least one of a transmission beam and a reception beam by using digital beam forming (e.g., precoding) or analog beam forming (e.g., phase rotation).

The transmission/reception section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmission/reception section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmission/reception section 220 (transmission processing section 2211) may perform the DFT processing as the above transmission processing to transmit the certain channel by using a DFT-s-OFDM waveform. When precoding is not enabled, the transmission/reception section 220 (transmission processing section 2211) may not perform the DFT processing as the above transmission processing.

The transmission/reception section 220 (RF section 222) may modulate the baseband signal into a radio frequency range, perform filter processing and amplification on the signal, and transmit the signal of the radio frequency range via the transmission/reception antennas 230.

On the other hand, the transmission/reception section 220 (RF section 222) may perform amplification and filter processing on the signal of the radio frequency range received by the transmission/reception antennas 230, and demodulate the signal into a baseband signal.

The transmission/reception section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmission/reception section 220 (measurement section 223) may perform measurement related to the received signal. For example, the measurement section 223 may perform, for example, RRM measurement or CSI measurement based on the received signal. The measurement section 223 may measure, for example, received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmission section and the reception section of the user terminal 20 according to the present disclosure may be composed of at least one of the transmission/reception section 220 and the transmission/reception antenna 230.

In addition, the transmission/reception section 220 may receive the reference signal (e.g., the SSB or the CSI-RS).

The control section 210 may determine one of the first reference signal (e.g., the TCI state or the QCL assumption) related to Quasi-Co-Location (QCL), and the second reference signal (e.g., pathloss measurement DL RS) used to measure pathloss for power control of certain uplink transmission (specific UL transmission) as the spatial relation of the certain uplink transmission based on an implicit or explicit configuration, and determine a parameter (e.g., power control parameter) related to power control of the certain uplink transmission. The transmission/reception section 220 may perform the certain uplink transmission according to the spatial relation.

The control section 210 may determine the parameter based on a given value or a higher layer signaling (embodiment 2).

The control section 210 may determine the second reference signal as the reference signal of the spatial relation (embodiment 1 "the TCI state, the QCL assumption or the RS used as a default spatial relation").

In a case where the reference signal of the spatial relation (e.g., spatial relation information) is indicated, the control section 210 may determine the reference signal of the spatial relation as the second reference signal (embodiment 3-1).

The control section 210 may determine the first reference signal as the second reference signal based on the configuration (embodiment 3-2).

(Hardware Configuration)

In addition, the block diagrams used to describe the above embodiments illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

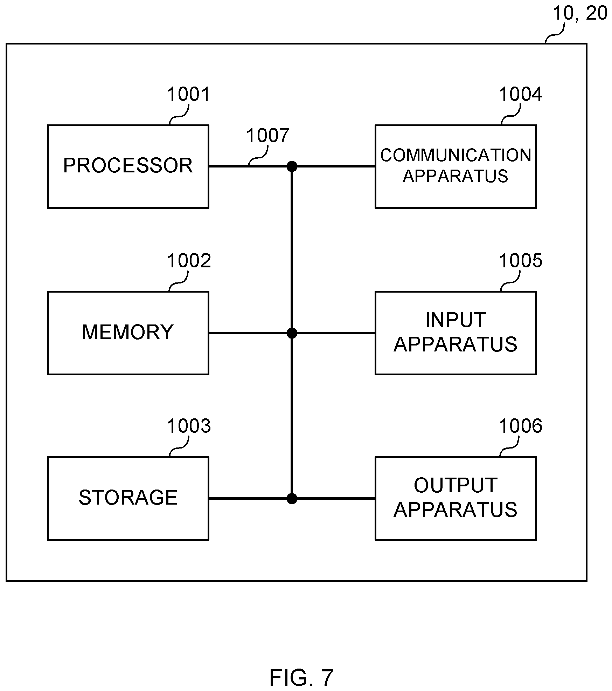

For example, the base station and the user terminal according to the one embodiment of the present disclosure may function as computers that perform processing of the radio communication method according to the present disclosure. Fig. 7 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 7 or may be configured without including part of the apparatuses.

For example, Fig. 7 illustrates the only one processor 1001. However, there may be a plurality of processors.

Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmission/reception section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiments are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception section 120 (220) and transmission/reception antennas 130 (230) may be realized by the communication apparatus 1004. The transmission/reception section 120 (220) may be physically or logically separately implemented as a transmission section 120a (220a) and a reception section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

(Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS, or may be referred to as a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or code word, or may be a processing unit of scheduling or link adaptation. In addition, when the TTI is given, a time period (e.g., the number of symbols) in which a transport block, a code block or a code word is actually mapped may be shorter than the TTI.

In addition, in a case where 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (Physical RB (PRB)), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a UL BWP (a BWP for UL) and a DL BWP (a BWP for DL). One or a plurality of BWPs in 1 carrier may be configured to the UE.

At least one of the configured BWPs may be active, and the UE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as the PUCCH and the PDCCH) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiments described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI state)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), the Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

In a case where the words "include" and "including" and modifications of these words are used in the present disclosure, these words intend to be comprehensive similar to the word "comprising". Furthermore, the word "or" used in the present disclosure intends to not be an exclusive OR.

In a case where, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiments described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

This application claims priority to Japanese Patent Application No. 2019-091721 filed on May 14, 2019, the entire contents of which are incorporated by reference herein.

**Claims**

1. A user terminal comprising:

   a control section that determines one of a first reference signal and a second reference signal as a spatial relation of certain uplink transmission based on an implicit or explicit configuration, and determines a parameter related to power control of the certain uplink transmission, the first reference signal relating to Quasi-Co-Location (QCL), and the second reference signal being used to measure pathloss for the power control of the certain uplink transmission; and
   a transmission section that performs the certain uplink transmission according to the spatial relation.

2. The user terminal according to claim 1, wherein the control section determines the parameter based on a given value or a higher layer signaling.

3. The user terminal according to claim 1 or 2, wherein the control section determines the second reference signal as a reference signal of the spatial relation.

4. The user terminal according to any one of claims 1 to 3, wherein, when a reference signal of the spatial relation is indicated, the control section determines the reference signal of the spatial relation as the second reference signal.

5. The user terminal according to any one of claims 1 to 4, wherein the control section determines the first reference signal as the second reference signal based on the configuration.

6. A wireless communication method of a user terminal comprising:

determining one of a first reference signal and a second reference signal as a spatial relation of certain uplink transmission based on an implicit or explicit configuration, and determining a parameter related to power control of the certain uplink transmission, the first reference signal relating to Quasi-Co-Location (QCL), and the second reference signal being used to measure pathloss for the power control of the certain uplink transmission; and performing the certain uplink transmission according to the spatial relation.

EP 3 972 320 A1

DL
gNB TRANSMISSION BEAM: B22
UE RECEPTION BEAM: b2

UL
UE TRANSMISSION BEAM: b2
gNB RECEPTION BEAM: B22

gNB

B24
B23
B22
B21

b4
b3
b2
b1

UE

FIG. 1

TCI STATE OR QCL ASSUMPTION
(RS OF QCL TYPE D) OF
SPECIFIC DL CHANNEL: b2

$\longrightarrow$

SPATIAL RELATION OF
SPECIFIC UL TRANSMISSION: b2

b4

b3

b2

b1

UE

FIG. 2

EP 3 972 320 A1

FIG. 3A

FIG. 3B

FIG. 4

FIG. 5

TRANSMITTING/RECEIVING SECTION — 220

RF SECTION — 222

MEASUREMENT SECTION — 223

BASEBAND SECTION — 221

TRANSMISSION PROCESSING SECTION — 2211

RECEPTION PROCESSING SECTION — 2212

CONTROL SECTION — 210

230

20

FIG. 6

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 7

## INTERNATIONAL SEARCH REPORT

| International application No. |
| --- |
| PCT/JP2020/019214 |

### A. CLASSIFICATION OF SUBJECT MATTER

H04W 16/28(2009.01)i; H04W 72/04(2009.01)i; H04B 7/06(2006.01)i; H04W 52/14(2009.01)i
FI: H04W52/14; H04W16/28; H04W72/04 136; H04B7/06 984
According to International Patent Classification (IPC) or to both national classification and IPC

### B. FIELDS SEARCHED

Minimum documentation searched (classification system followed by classification symbols)
H04W16/28; H04W72/04; H04B7/06; H04W52/14

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | ERICSSON, Signalling reduction for beam-based UL power control [online], 3GPP TSG RAN WG1 #97 R1-1907475, 03 May 2019, section 2, in particular, section 2 | 1–6 |

☐ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 August 2020 (14.08.2020) | 25 August 2020 (25.08.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019091721 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010